(19)

**Europäisches Patentamt**
**European Patent Office**
**Office européen des brevets**

(11)  **EP 4 311 125 A1**

(12)  ## EUROPEAN PATENT APPLICATION

(43)  Date of publication:
**24.01.2024 Bulletin 2024/04**

(21)  Application number: **22306082.3**

(22)  Date of filing: **20.07.2022**

(51)  International Patent Classification (IPC):
*H04B 7/185* (2006.01)   *H04W 56/00* (2009.01)

(52)  Cooperative Patent Classification (CPC):
**H04B 7/18519; H04W 56/0045**

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71)  Applicants:
• **Mitsubishi Electric R&D Centre Europe B.V.
1119 NS Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72)  Inventors:
• **CIOCHINA, Cristina
35708 RENNES CEDEX 7 (FR)**
• **BONNEVILLE, Hervé
35708 RENNES CEDEX 7 (FR)**

(74)  Representative: **Plasseraud IP
66, rue de la Chaussée d'Antin
75440 Paris Cedex 09 (FR)**

(54)  **DOUBLE CONTROL LOOP MANAGEMENT FOR TIMING ADVANCE UPDATE IN CONNECTED MODE**

(57)      A method performed by a user equipment connected to a base station of a satellite communication network for sending a signal using an updated value of timing advance, the user equipment determining values of timing advance based on at least assistance information, measurements, timing advance commands,
the method comprising :
selecting a transmission time of the signal between at least:
-- a target time of transmission of the signal, and
-- a postponed time of transmission of the signal, later than the target time, based on a combination of at least two elements among: a time-related parameter, a final timing advance command received at a final command time, final measurements obtained at a final measurement time, final assistance information received at a final assistance time, the final measurement, command and assistance times,

transmitting the signal to the base station at the transmission time using the updated value of timing advance.

FIG. 1

EP 4 311 125 A1

Description

**Technical Field**

This disclosure relates to the field of telecommunications in non-terrestrial networks (NTN) and more particularly to performing transmissions using satellite communication networks.

**Background Art**

The deployment of constellations of satellites in a Non-Geostationary Satellite Orbit (or NGSO) such as in Low-Earth Orbit (or LEO) and in Middle-Earth Orbit (or MEO) forms a satellite communication network having a time and space-varying coverage (via satellite cells) on the Earth surface. Thus, user equipments (or UEs) communicating over the satellite communication network perform various procedures in wireless communication standard - such as LTE, Advanced LTE or New Radio (NR) - in order to obtain and/or maintain connection to the satellite communication network throughout time. For example, in order to obtain an initial access to a satellite cell deployed by a satellite, a user equipment may perform a random-access procedure (or RACH procedure) in order to connect to the satellite communication network and be allocated resources for further transmissions. For example, in order to maintain an existing connection with the satellite communication network when a change of coverage occurs (e.g., due to the movement of the constellation of satellites), a user equipment may perform handover procedures in order to switch its connection from a serving cell to another target cell. When a user equipment has established a connection with the satellite communication network via a satellite cell, the user equipment is able to notably transmit and receive signals to/from the satellite communication network via the satellite cell by communicating with a base station serving such satellite cell.

Such interactions with the satellite communication network thus include data and control signals emitted by the user equipment to the satellite communication network. Moreover, when sending a signal through the satellite cell, the user equipment takes into account a value of timing advance to be used in the satellite cell in order to compensate for the propagation delay between the user equipment and a reference point receiving such signal in the satellite communication network.

For example, the determination of such value of timing advance occurs in the procedure for initial access based on a first message (Msg1 of the RACH procedure) of the RACH procedure received by the base station from the user equipment. Later in the same RACH procedure, the value of the timing advance of the user equipment in the base station is estimated by the base station and is transmitted (Msg2 of the RACH procedure) to the UE which uses it to introduce a time delay when emitting signals through the target cell.

When the user equipment is connected to a serving cell (and that is, to a serving base station), the user equipment regularly updates the timing advance to be used in such serving cell when sending signals, in order to maintain an uplink timing synchronization with the network. In particular, the timing advance update, when the user equipment is connected to the serving cell, relies on a double loop mechanism. Such double loop mechanism comprises :

- a closed loop mechanism, which consists in the user equipment receiving explicit timing advance commands (or TAC) from the network, such timing advance commands providing an updated value of timing advance to be used in the serving cell by the user equipment. A timing advance command is notably received by the user equipment as a network reaction to a former signal emitted by the user equipment to the network, the network being able to determine the updated value of timing advance based on such former signal.

- an open loop mechanism, which consists in a self-update of the timing advance by the user equipment, based on various measurements performed by the user equipment and on assistance information received by the user equipment (notably from the network).

In particular, closed loop and open loop mechanisms run in parallel and the user equipment in thus provided with various sources of information related to timing advance update at various times. Depending on the times when such information is received by the user equipment and on the timing advance correction implied by such information, the user equipment may perform incorrect timing advance updates. Indeed, depending on their timings, open loop information and closed loop commands may contain redundant or contradictory information, leading the user equipment to possibly experiment timing advance overcompensation or timing advance update jumps. An incorrect update of the timing advance leads to the loss of the uplink timing synchronization. Such loss of the uplink timing synchronization further results in a radio link failure (or RLF), which notably causes time, reliability and/or radio resource waste for both the user equipment and the satellite communication network.

As a consequence, in order to maintain a synchronization to the satellite communication network, a user equipment in a connected state is required to perform a consistent and reliable timing advance update based on various sources of timing advance corrections received according to different time patterns.

## Summary

This disclosure improves the situation.

It is proposed a method performed by a user equipment for sending a signal to a base station using an updated value of timing advance, the user equipment being connected to the base station, the base station corresponding to a cell supported by a non-geostationary orbit satellite of a satellite communication network,

the user equipment determining values of timing advance based on at least:

-   data related to assistance information received by the user equipment associated with assistance times,

-   data related to measurements obtained by the user equipment associated with measurement times,

-   data related to timing advance commands received from the network associated with command times,

the method comprising :

selecting a transmission time of the signal between at least:

-- a target time of transmission of the signal, and

-- a postponed time of transmission of the signal, said postponed time being later than the target time,

transmitting the signal to the base station at the transmission time using the updated value of timing advance,

wherein the selected transmission time is chosen on the basis of a combination of at least two elements among at least:

-   a time-related parameter,

-   data related to a final timing advance command associated with a final command time,

-   data related to final measurements associated with a final measurement time,

-   data related to final assistance information associated with a final assistance time,

-   data related to the final measurement time,

-   data related to the final command time, and

-   data related to the final assistance time.

Thus, the proposed method enables, for a user equipment connected to a satellite communication network in a cell, to send a signal, more particularly an uplink transmission, to a base station serving such user equipment using a value of timing advance in the cell as accurate as possible. In particular, the method proposes to compare different yet parallel sources of information enabling to update the timing advance value. Such different sources of information may be, depending on the times they provide information to the user equipment, either redundant or complementary information with respect to one another.

Thus, by actively selecting a transmission timing of the signal, the proposed method enables the user equipment to avoid timing advance jumps or, on the contrary, an overcompensation of the timing advance to be applied when sending the signal, both situations potentially leading to a loss of timing synchronization between the user equipment and the network side, or even to a radio link failure (or RLF) situation.

Indeed, the present disclosure proposes to select the transmission time of the signal based on both :

-   data enabling to quantify a last value used as timing advance (i.e., data related to the final timing advance command, to the final measurements and/or to the final assistance information), and

- data enabling to date the obsolescence of the data used to quantify such last value used as timing advance (i.e., data related to the final command time, to the final measurement time and/or to the final assistance time).

Thus, in contrary to existing methods, the user equipment does not by default, send a signal to the base station at the immediate next time opportunity (or time occasion) the user equipment has to do so (for example, at the immediate next time window allocated or provided by the network to the user equipment). The present disclosure enables the user equipment to play an active part in deciding on when to send the signal to the base station. Moreover, such decision is taken by the user equipment so as to optimize the accuracy of the updated value to be used as timing advance for sending the signal.

A consequence of such selection is that the method provides the possibility for the user equipment to voluntarily (that is, intentionally) postpone the transmission of the signal to a postponed time of transmission, instead of transmitting the signal at the immediate upcoming time opportunity provided by the network. Such intentional postponing of the transmission time of the signal may for example be decided by the user equipment if the user equipment determines that the data at its disposal for determining a value to be used as a timing advance is obsolete and/or reflects a considerable timing advance adjustment. In such case, the user equipment may, providing notably its timing requirements to send the signal, decide to send the signal at a postponed time of transmission over a target time of transmission in an attempt to be able to determine a more relevant timing advance value. For example, postponing the transmission of the signal may enable the user equipment to retrieve additional and updated information in the meanwhile, so as to determine the updated value of timing advance to be used for sending the signal based on such additional and updated information. The method thus enables the user equipment to evaluate the information used to determine a timing advance value as it is currently known by the user equipment (that is, at its disposal when intending to send a signal) and to question the relevance of such information, such evaluation potentially impacting the timing intention of the user equipment to send the signal to the base station.

By sending a signal to the base station, it may be understood performing an uplink communication to the base station of the satellite communication network. The signal sent by the user equipment to the base station may be a data signal (or data traffic). The signal sent by the user equipment to the base station may also be a control signal such as a Scheduling Request (or SR) or a Buffer Status Report (or BSR). Such signal may be sent to the base station in the context of a configured grant, a semi-configured grant or a dynamic grant for example. For instance, in the case of configured grants, the signal may be a periodic traffic data signal to be transmitted to the base station, using radio resources allocated by the network (e.g., Physical Uplink Shared Channel resources or PUSCH resources) to the user equipment UE. In the case of dynamic grants, the signal may be a SR signal to be transmitted to the base station in order to request PUSCH resource allocation, using radio resources allocated by the network (e.g., Physical Uplink Control Channel resources or PUCCH resources) to the user equipment UE. More generally, such signal may be sent to the base station within a scheduled time window (or time opportunity) allocated by the network.

By being connected to the base station corresponding to a cell supported by a non-geostationary orbit satellite of a satellite communication network, it is understood that the user equipment is in an RRC_CONNECTED state via a cell projected by one or several satellite beams of satellite(s) of the network, such cell being allocated radio resources managed by a corresponding base station. In particular, the user equipment is connected to the base station after having performed an initial access procedure (e.g., RACH procedure) or a handover procedure from a previous cell managed by another base station the user equipment was connected to for example.

By a final element (e.g., a final timing advance command, final assistance information or final measurement), it is understood an element stored in the memory of the user equipment that will be used by the user equipment for a current event (such as determining a current value of timing advance). Such final element may for example be the only element at the disposal of the user equipment (e.g., a preconfigured element stored by the user equipment) or an element for which the user equipment receives updates (e.g., a timing advance command, assistance information or measurements). The user equipment thus have the final element available for use within its memory, for example in the context of a last-in-first-out (LIFO) memory. Thus, such final element is the most up-to-date element at the disposal of the user equipment considering a given state of the memory of the user equipment. Such final element may then possibly be updated, so that such final element is no more the most up-to-date element at the disposal of the user equipment in such updated state of its memory. For example, a final measurement refers to a measurement lastly obtained by the user equipment, for example stored at the top of its memory in the case of a LIFO memory structure. Another measurement may occur afterwards.

By data related to assistance information, it is understood open loop (or OL) information obtained or received by the user equipment from a network entity. Such network entity may refer to a base station, a satellite or any other entity on the network side. The data related to assistance information may refer to content included in System Information Blocks (or SIB) emitted by the network that the user equipment may obtain. The data related to assistance information may also refer to the content of network signaling related to positions, ephemerides, properties of satellites, satellite beams, cells of the satellite communication network. The data related to assistance information may also refer to epoch times, radio resource configuration information, cell-related information. More generally, data related to assistance information may refer to any content which is preconfigured, preset, set, predictable and/or known on the network's side. Based on such data related to assistance information, the user equipment may for example obtain, receive and/or compute a position of the satellite serving such user equipment. Such data related to assistance information may be obtained by the user equipment via broadcasted, groupcasted and/or dedicated downlink signaling within cell(s) served by the network.

By data related to final assistance information, it is understood data related to assistance information that was lastly received by the user equipment at a considered current time. In other words, the final assistance information may be understood as the most recent and updated assistance information at the disposal of the user equipment at the current time. In particular, the user equipment may have determined the last value used at timing advance (also referred to as the current value used as timing advance) based on such final assistance information.

By an assistance time, it is understood a time associated with assistance information obtained by the user equipment. Such time may be expressed in time units, steps, samples, slots etc. or according to a timestamp of a user equipment's timer. Such assistance time may for example refer to a time when data related to assistance information is received by the user equipment. Such assistance time may for example refer to a time when the user equipment may request assistance information. Such assistance time may also refer to a time when such data related to assistance information is actually used or computed by the user equipment, for example for determining a value to be used as timing advance. Indeed, there may exist a time delay between the time of reception of the assistance information and the time of computation of such assistance information. The assistance times may then be understood as respective times at which data related to assistance information are successively received by the user equipment. Such assistance times may notably be set by the network according to a configured periodicity. Such assistance times may notably correspond to specific time windows or time gaps during which data related to assistance information may be provided to the user equipment or requested by the user equipment.

By a final assistance time, it is understood the time associated to the final assistance information. Such final assistance time may also be referred to as the "last assistance time". Thus, such final assistance time may for example refer to a time when data related to the final assistance information is received by the user equipment. Such final assistance time may also refer to a time when such data related to the final assistance information is actually used or computed by the user equipment, for example for determining the current value to be used as timing advance. In other words, the final assistance time is the most recent time at which the user equipment has received data related to assistance information.

By data related to measurements, it is understood open loop (or OL) information obtained, computed and/or measured by the user equipment. Such data related to measurements may be radio signal measurements performed by the user equipment using positioning techniques. Such data related to measurements may also be data gathered by the user equipment from sensors integrated to the user equipment. Such data related to measurements may notably enable the user equipment to estimate a location of the user equipment.

By data related to final measurements, it is understood data related to measurements that were lastly performed or obtained by the user equipment at a considered current time. In other words, the final measurements may be understood as the most recent and updated measurements at the disposal of the user equipment at the current time. In particular, the user equipment may have determined the last value used at timing advance based on such final measurements.

By a measurement time, it is understood a time associated with measurements performed or obtained by the user equipment. Such time may be expressed in time units, steps, samples, slots etc. or according to a timestamp of a user equipment's timer. Such measurement time may for example refer to a time when data related to measurements may be obtained by the user equipment. Such assistance time may also refer to a time when such data related to measurements may actually be used or computed by the user equipment, for example for determining a value to be used as timing advance. Indeed, there may exist a time delay between the time of performing or obtaining measurements and the time of computation or processing of such measurements for determining a value to be used as timing advance. Measurement times may notably correspond to measurement time gaps configured by the network during which the user equipment may perform measurements. Measurement times may also be times set by the user equipment for performing measurements.

By a final measurement time, it is understood the time associated to the final measurements performed or obtained by the user equipment. Such final measurement time may also be referred to as the "last measurement time". Thus, such final measurement time may for example refer to a time when data related to the final measurements is received by the user equipment. Such final assistance time may also refer to a time when such data related to the final measurements is actually used or computed by the user equipment, for example for determining the current value to be used as timing advance. In other words, the final measurement time is the most recent time at which the user equipment has obtained or processed data related to measurements.

By data related to timing advance commands, it is understood data contained in the Timing Advance Command (or TAC) signals emitted by the network. Such TAC signal is specifically sent to a user equipment as a dedicated downlink signal, via MAC-CE. Such data related to timing advance commands may correspond to the timing advance command 6 -bit value contained in the MAC-CE TAC signal. Such data related to the timing advance command may thus relate to closed loop (or CL) information providing a source of timing advance adjustment to the user equipment from the network. Such data related to timing advance commands may be a timing advance adjustment value comprised between 0 and 63 units.

By a command time, it is understood a time associated with data related to a timing advance command. Such time may be expressed in time units, steps, samples, slots etc. or according to a timestamp of a user equipment's timer. Such command time may for example refer to a time when data related to a TAC signal is received by the user equipment. Such command time may also refer to a time when such data related to a timing advance command may actually be used, computed or applied by the user equipment, for example for determining a value to be used as timing advance. Indeed, there may exist a time delay between the reception time of the timing advance command signal and the application of the content of such timing advance command signal for determining a value to be used as timing advance. Such time delay may for example be six time slots in the case of the closed-loop adjustment. Command times are decided by the network. Command times may yet depend on the sending of an uplink signal by the user equipment to the base station. The network is indeed able to emit a timing advance correction via a TAC signal based on the timing information of such uplink signal for example. In other words, the base station may emit timing advance commands at command times as long as uplink signals are sent by the user equipment.

By a final command time, it is understood the time associated to the final timing advance command signal received by the user equipment. Such final command time may also be referred to as the "last command time". Thus, such final command time may for example refer to a time when data related to the final timing advance command is received by the user equipment. Such final assistance time may also refer to a time when such data related to the final timing advance command (e.g., the timing advance adjustment value contained in the TAC) is actually used or applied by the user equipment, for example for determining the current value used as timing advance or for sending the signal using such current value used as timing advance. In other words, the final command time is the most recent time at which the user equipment has received or apply data related to a timing advance command.

By a target time of transmission of the signal, it is understood an immediate next time opportunity (or time window) given to the user equipment for transmitting the signal S. Such target time of transmission may notably be the immediate upcoming time opportunity allocated by the network, for example in the context of a configured or semi-configured grant. Such target time of transmission may also refer to the immediate upcoming time opportunity provided by the network for the sending of a control signal (such as a BSR or an SR signal). More generally, the target time of transmission of the signal refers to the closest upcoming time opportunity with respect to a current time for the user equipment to send the signal to the base station.

By a postponed time of transmission of the signal, it is understood a next time opportunity (or time window) given to the user equipment for transmitting the signal S. Such postponed time of transmission may notably be an upcoming time window configured by the network, for example in the context of a configured or semi-configured grant. Such postponed time of transmission may also refer to a time opportunity allocated by the network for sending a control signal (e.g., a BSR or an SR signal) to the base station. In particular, a postponed time of transmission is understood as a later time opportunity with respect to the target time of transmission. In other words, such postponed time of transmission is a deferred time opportunity for the user equipment to send the signal to the base station. Such postponed time of transmission may be later than the target time of transmission by one or several time slots.

By selecting a transmission time of the signal, it is understood choosing a specific time window (also referred to as a specific time occasion or time opportunity) configured by the network for sending the signal to the base station. In other words, it is an intentional choice (or a decision) of the user equipment to select the timing of transmission of the signal. In particular, by selecting the transmission time to be the postponed time over the target time of transmission, the user equipment intentionally decides to defer the sending of the signal, despite having a sooner time opportunity (that is, the target time of transmission) available for doing so.

By the selected transmission time being chosen on the basis of a combination of at least two elements, it is understood that such selection may notably be performed taking one or several constraints (or criteria) into account. In other words, the user equipment considers several elements in order to decide on the transmission time to be selected. Such constraints may include a time-related parameter. A time-related parameter is understood as a time-related constraint to be considered by the user equipment for sending the signal. The time-related parameter may for example refer to delimited and specific time opportunities allocated by the network among which the transmission time may be selected. For example, in the context of configured or semi-configured grants, the user equipment may be allocated several configured time windows during which the user equipment can send the signal to the base station. Such configured time windows may notably include at least the target time of transmission and the postponed time of transmission. In the context of dynamic grants, the user equipment may be allocated several configured time windows during which the user equipment can send a control signal to the base station (e.g., send an SR), so as to obtain further resources to send a data signal for example. The time-related parameter may also refer to a timing requirement to be met by the user equipment, for example in the context of latency requirements defined in the service level agreements (or SLAs) of the service served by the user equipment. In other words, the transmission time of the signal may be selected so as to respect latency requirements. The time-related parameter may also refer to a time threshold, for example set, preconfigured, configured or predetermined by the user equipment or the network. Such time threshold may notably depend on a current time at which the user equipment selects the transmission time. Such time threshold may enable to perform an obsolescence check on the current information possessed by the user equipment for sending the signal to the base station, such information being for instance timing advance commands, assistance information and/or measurements already obtained by the user equipment. In other words, the time threshold may enable the user equipment to distinguish information received at a sufficiently recent time to be considered relevant from information susceptible to be obsolete and thus irrelevant, notably in order to determine the updated value of timing advance. In particular, the time threshold may be used by the user equipment for identifying whether the user equipment may require the obtention of updated information in order to determine an updated value of timing advance.

The transmission time may also be selected on the basis of data related to the final measurement time, to the final command time and/or to the final assistance time. In other words, the final measurement time, the final command time and/or the final assistance time may be taken into account by the user equipment for selecting the transmission, and notably for possibly deferring the sending of the signal. In other words, the user equipment may select the transmission time based on the times at which the most recent and up-to-date information has been obtained or used by the user equipment. For example, the user equipment may select the transmission time to be the postponed time of transmission if the final measurement time, the final command time and/or the final assistance time is considered obsolete.

The transmission time may also be selected on the basis of data related to the final timing advance command, to the final measurements and/or to the final assistance information. In other words, the user equipment may select the transmission time based on the content of the most recent and up-to-date information obtained or used by the user equipment. For example, the user equipment may select the transmission time to be the postponed time of transmission if the final timing advance command, the final measurements and/or the final assistance information reflects such a big timing advance adjustment that the user equipment may postpone the sending of the signal for further information.

By an updated value of timing advance, it is understood a value to be determined by the user equipment and to be used for sending the signal to the base station, so as to compensate the propagation delay between the user equipment UE and a predefined network reference point, which may be located at the base station BS managing the cell for instance or at the satellite SAT supporting the cell, or any reference point between those two points. In particular, such updated value of timing advance may be determined before the transmission time of the signal, so that the user equipment may use such updated value of timing advance for sending the signal to the base station. Such updated value of timing advance may be determined by the user equipment to be equal to a current value used as timing advance, that is, a value already determined or used by the user equipment at the current time. The current value used as timing advance may for example have been determined at a previous time (before the current time) and used for sending a previous signal. For example, the current value used as timing advance may have been used for sending the last signal sent by the user equipment to the base station. Such current value used as timing advance may notably be determined based on the final timing advance command, the final measurements and the final assistance information. The updated value to be used as timing advance may also be different from the current value used as timing advance. Such updated value to be used as timing advance may notably differ from the current value used as timing advance if the information possessed by the user equipment are considered obsolete at the current time and that updated information may be obtained for example.

According to an embodiment of the present disclosure, the method further comprises :
emitting a support signal to the base station, distinct from the signal, said support signal being transmitted at a support time depending on the target time of transmission of the signal.

As a consequence, the user equipment may be able to transmit another signal distinct from the signal to be sent at the transmission time, so as to prepare for the sending of the latter. In particular, such support signal may be sent to the network as a request for updated assistance information or updated measurements with respect to the final assistance information or the final measurements respectively. Such support signal may also be sent to the network as a request for an updated timing advance command with respect to the final timing advance command. Plus, the support signal may be transmitted in the context of a configured grant, a semi-configured grant or a dynamic grant. In particular, the user equipment may send a support signal to the base station even in the case of a configured grant, wherein the user equipment has pre-allocated Physical Uplink Shared Channel (or PUSCH) resources. The user equipment may for example decide to postpone the sending of the signal to the postponed time of transmission and send a support signal beforehand in order to request for updated information for determining the updated value to be used as timing advance.

By a support signal, it is understood an uplink transmission performed by the user equipment to the base station. Such support signal is notably sent before sending the signal. Such support signal may notably be a control signal, such as a BSR or an SR signal.

By such support signal depending on the target time of transmission, it is understood that the user equipment may decide on the timing of the support time depending on the upcoming time opportunity for transmitting the signal to the base station. The support time may be prior to or later than the target time of transmission.

According to an embodiment of the present disclosure, data related to the assistance information and data related to the measurements providing values of a self-correction parameter are used by the user equipment to determine the values of timing advance, and the emission of the support signal is furthermore based on at least one of following criteria :

- a first time gap between the final command time and a current time exceeding a preconfigured first gap threshold, or

- the final command time preceding the final assistance time and :

-- a second time gap between the final assistance time and/or the measurement time, and the current time exceeding a preconfigured second gap threshold, or
-- the value of the self-correction parameter determined based on the data related to the final assistance information and/or the final measurements exceeding a preconfigured self-correction threshold.

As a consequence, the proposed method enables the sending of a support signal to the base station in order to request updated information for determining the updated value to be used as timing advance.

By a first time gap between the final command time and a current time exceeding a preconfigured first gap threshold, it is understood that the support signal may be sent if the final timing advance command at the disposal of the user equipment has become obsolete at the current time. The user equipment may thus require an updated timing advance command and thus sends the support signal to that end.

By a preconfigured first gap threshold, it is understood a time gap configured by the user equipment or the network. Such preconfigured first gap threshold notably quantifies the obsolescence of closed loop information. For example, if the time gap between a command time and the current time exceeds the preconfigured first gap threshold, the timing advance command associated to such command time is considered to be obsolete content for determining the updated value to be used as timing advance.

By the final command time preceding the final assistance time and a second time gap between the final assistance time and/or the final measurement time and the current time exceeding a preconfigured second gap threshold, it is understood that the support signal may be sent if the most recent information obtained by the user equipment is open loop information and if the latter has become obsolete at the current time. The user equipment may thus require updated closed loop information and/or updated open loop information and may thus send a support signal to that end.

By a preconfigured second gap threshold, it is understood a time gap configured by the user equipment or the network. Such preconfigured second gap threshold notably quantifies the obsolescence of open loop information. For example, if the time gap between an assistance time and/or a measurement time and the current time exceeds the preconfigured second gap threshold, the assistance information associated to such assistance time and/or the measurements associated to such measurement time is considered to be obsolete content for determining the updated value to be used as timing advance. The preconfigured second gap threshold may differ or be equal to the preconfigured first gap threshold.

By the final command time preceding the final assistance time and a second time gap between the final assistance time and/or the final measurement time and the value of the self-correction parameter determined based on the data related to the final assistance information and/or the final measurements exceeding a preconfigured self-correction threshold, it is understood the support signal may be sent if the most recent information obtained by the user equipment is open loop information and if the latter reflects a significant (or substantial) timing advance adjustment (or correction) required, significant being understood as exceeding the self-correction parameter. The user equipment may thus require updated closed loop information and/or updated open loop information in order to further quantify such required timing advance adjustment and may thus send a support signal to that end.

By a self-correction parameter, it is understood a timing advance correction (or adjustment) value provided by assistance information obtained from the network and/or measurements performed by the user equipment, both information resulting in a self-adjustment of the timing advance by the user equipment. Such self-correction parameter may thus enable the user equipment to perform bigger adjustments of the timing advance value compared to a correction parameter provided by the network via a timing advance command for example (since the latter is size-limited). Such self-correction parameter quantifies the open loop information (or the open loop correction of the timing advance).

By a preconfigured self-correction threshold, it is understood a threshold value configured by the network or by the user equipment. Such threshold value may be expressed in a number of timing advance correction units. Such preconfigured self-correction threshold value may notably reflect how significant (or substantial) the open loop correction is. For example, if the self-correction parameter is below the preconfigured self-correction threshold, the open loop correction may be considered neglectable whereas if the self-correction parameter is above the preconfigured self-correction threshold, the open loop correction may be considered significant.

According to an embodiment of the present disclosure, the time-related parameter is related to a validity time of the data used to determine the values of timing advance, and the emission of the support signal is furthermore based on the following criterium :

- any one of the final command time, the final measurement time and the final assistance time is prior to the validity time.

As a consequence, the user equipment may take the initiative to send the support signal to the base station if any part of the most up-to-date information at the disposal of the user equipment is considered obsolete, obsolete being understood as being prior to the validity time.

By a validity time, it may be understood a time slot prior to the current time. Such validity time may be set or configured by the user equipment or by the network. Such validity time may notably vary depending on the current time. For example, the validity may be the time slot having a two-slot gap with the current time. In particular, comparing the final command time with the validity time may be equivalent to comparing the first time gap between the final command time and the current time with the preconfigured first gap threshold. In particular, comparing the final assistance time and/or the final measurement time with the validity time may be equivalent to comparing the second time gap between the final assistance time and/or the final measurement time, and the current time with the preconfigured second gap threshold. In particular, in the case of equal preconfigured first and second gap thresholds, such gap threshold corresponds to the time gap between the current time and the validity time.

According to an embodiment of the present disclosure, the support signal is emitted using a support value of timing advance, said support value of timing advance being determined based on a combination of at least two elements among at least:

- the time-related parameter,

- the data related to the final timing advance command received,

- the data related to the final measurements performed,

- the data related to final assistance information received,

- the data related to the final measurement time,

- the data related to the final command time, and

- the data related to the final assistance time.

As a consequence, the support signal may be emitted using a support value of timing advance so as to anticipate, at least partially, the timing advance adjustment to be applied for sending the signal to the base station. Indeed, by applying a support value of timing advance when sending the support signal based on the most recent information at the disposal of the user equipment, the user equipment reduces the time difference to be compensated by the timing advance when sending an uplink transmission to the base station. Thus, the updated open loop or closed loop information received afterwards (if any) takes such support value of timing advance into account when indicating the timing advance correction to be applied to the user equipment. In particular, such support value of timing advance may be determined based on the most recent information at the disposal of the user equipment at the current time. In other words, the support value of timing advance may correspond to a current value of timing advance as lastly determined by the user equipment.

According to an embodiment of the present disclosure, the support signal is one element among at least:

- an uplink reference signal such as a Sounding Reference Signal,

- a control signal,

- a Buffer Status Report, and

- a Scheduling Request.

As a consequence, the support signal to be sent to the base station may be sent in the context of a configured grant, a semi-configured grant or a dynamic grant. Such signal may thus be sent using Physical Uplink Shared Channel resources (or PUSCH) or Physical Uplink Control Channel (or PUCCH) resources. In particular, in contrary to existing methods, the user equipment may decide to send the support signal even in the case of a configured grant, wherein the user equipment already has dedicated PUSCH resources for sending the signal.

According to an embodiment of the present disclosure, the transmission time is selected to be the postponed time of transmission if :

- data related to updated assistance information is predicted to be associated with an updated assistance time comprised between the target time of transmission and the postponed time of transmission, and/or

- data related to updated measurements is determined to be associated with an updated measurement time comprised between the target time of transmission and the postponed time of transmission.

As a consequence, the user equipment may intentionally decide to postpone the transmission of the signal by selecting the transmission time to be the postponed time of transmission over the target time of transmission if the user equipment determines that postponing the transmission of the signal may enable the user equipment to obtain updated information in order to determine the updated value to be used as timing advance. In particular, the user equipment postpones the transmission of the signal if updated open loop information is predicted or determined to be received, obtained or applied between the target time of transmission and the postponed time of transmission. Thus, the user equipment intentionally decides to waive the time opportunity to send the signal at the target time of transmission so as to wait for updated information to be used for determining a more relevant updated value to be used as timing advance compared to only using the information currently at the disposal of the user equipment (notably, the final timing advance command, the final assistance information and the final measurements).

By updated assistance information, it is understood assistance information received after the final assistance information. Such updated assistance information will notably be more accurate open loop information for determining the updated value to be used as timing advance for sending the signal compared to the final assistance information. Such updated assistance information is not at the disposal of (that is, not known by) the user equipment at the current time. The user equipment may notably predict or determine that such updated assistance information may be obtained by the user equipment at an updated assistance time. By updated assistance time, it is understood a time later than the current time associated with the updated assistance information. Such updated assistance time may be the time at which the user equipment will receive, obtain, apply or utilize the updated assistance information.

By data related to updated assistance information predicted to be associated with an updated assistance time, it is understood that the user equipment may be able to estimate the immediate upcoming assistance time at which updated assistance information will be at the disposal of the user equipment. In particular, such prediction may be possible in the context of System Information Blocks (or SIB) and other network information being broadcasted by the network at configured times or according to configured periodicities known by the user equipment. Such updated assistance time may be predictable based on former assistance information previously received at former assistance times.

By data related to updated measurements, it is understood measurements performed after the final measurements. Such measurements will notably be more accurate open loop information for determining the updated value to be used as timing advance for sending the signal compared to the final measurements. Such updated measurements are not possessed by the user equipment at the current time. The user equipment may notably determine that such updated measurements may be obtained, performed or applied by the user equipment at an updated measurement time. By updated measurement time, it is understood a time later than the current time at which the user equipment associated with the updated measurements. Such updated measurement time may notably be anticipated when it is chosen by the user equipment if the user equipment has the hardware capabilities for deciding on the measurement times. Such updated measurement time may also be configured by the network as a measurement gap provided by the network during which the user equipment may perform the updated measurements.

According to an embodiment of the present disclosure, data related to timing advance commands providing values of a correction parameter is used by the user equipment to determine the values of timing advance,

and the transmission time is selected to be the postponed time of transmission if:

- a gap between the final command time and a current time is below a preconfigured first threshold, and

- the value of the correction parameter determined based on the data related to the final timing advance command exceeds a preconfigured correction threshold, and

- data related to updated assistance information is predicted to be associated with an updated assistance time later than the final assistance time and later than the current time, said updated assistance time being comprised between the target time of transmission and the postponed time of transmission, and/or

data related to updated measurements is determined to be associated with an updated measurement time later than the final measurement time and later than the current time, said updated measurement time being comprised between the target time and the postponed time.

As a consequence, the user equipment may intentionally decide to waive the closest time opportunity provided by the network for sending the signal and to postpone the sending of the signal even if the final timing advance command is not considered to be obsolete information. Indeed, the user equipment may decide to postpone the sending of the signal if the final timing advance command reflects a significant timing advance adjustment (significant being understood here as a timing advance correction sent by the network exceeding a preconfigured correction threshold) and if imminent open loop information may potentially be received in order to further confirm, infirm or quantify such closed loop correction. Indeed, in such context, if the user equipment determines or predicts that updated assistance information and/or updated measurements is associated with (that is, to be received, obtained or applied) after the target time of transmission, the user equipment may decide to wait for such upcoming information by postponing the transmission of the signal. In such way, the proposed method enables to prevent potential overcompensations of the timing advance due to overlapping and concurrent sources of timing advance correction (that is, open and closed loops).

According to an embodiment of the present disclosure, the determination of the updated value of timing advance used to send the signal is performed based on at least said updated assistance information associated with said updated assistance time and/or said updated measurements associated with said updated measurement time.

As a consequence, the updated value of timing advance to be determined by the user equipment and to be used for sending the signal to the base station may rely on updated open loop information, notably when such open loop information may be obtained by the user equipment before the transmission time. Thus, the proposed method enables the user equipment to determine a more relevant updated value to be used as timing advance compared to an updated value of timing advance determined solely on information at the disposal of the user equipment at the current time.

According to an embodiment of the present disclosure, the user equipment updating values of a timing error parameter relating to an estimation of an error when determining the values of timing advance, the method further comprises :

updating the timing error parameter if the transmission time is selected to be the target time.

As a consequence, the user equipment may evaluate the accuracy of the timing advance implementation used when determining a value used as timing advance for sending signals to the base station. In particular, when the user equipment decides to send the signal at the immediate upcoming time opportunity provided by the network, the user equipment may quantify a timing error parameter so that the user has knowledge about the accuracy of its computation process. Indeed, the user equipment may decide to send the signal at the target time of transmission because the user equipment determines that it does not require updated information and that the final timing advance command, the final assistance information and the final measurements remain relevant for determining the updated value to be used as timing advance. In such case, the user equipment has no reason to intentionally postpone the transmission of the signal and decides to perform the transmission of the signal as soon as possible, that is, at the target time of transmission. In such case, the timing error parameter may be updated so as to increase the accuracy of the timing advance implementation. However, the user equipment may decide to send the signal at the target time of transmission despite requiring updated closed loop and/or open loop information, for example due to latency requirements for sending the signal (e.g., the user equipment cannot postpone its transmission to the postponed time of transmission due to latency requirements). In such case, the timing error parameter may be updated so as to decrease the accuracy of the timing advance implementation, since the user equipment is aware that the updated value to be used as timing advance may be inaccurate by relying on the final information only.

By a timing error parameter, it is understood a counter value, for example a cumulative counter value, or a percentage which quantifies the error (or equivalently, the accuracy) of the implementation of the timing advance value by the user equipment. Such timing error parameter may for example be increased if the value to be used as timing advance as determined by the user equipment is known by the user equipment to be inaccurate. Such timing error parameter may for example be decreased if the value to be used as timing advance as determined by the user equipment is known by the user equipment to be accurate.

According to an embodiment of the present disclosure, data related to timing advance commands provides values of a correction parameter being used by the user equipment to determine the values of timing advance,

and the update of the timing error parameter consists in increasing the value of the timing error parameter if :
- a gap between the final command time and a current time is below a preconfigured first threshold, and

the value of the correction parameter determined based on the data related to the final timing advance command exceeds a preconfigured correction threshold, and

data related to updated assistance information is predicted to be associated with an updated assistance time later than the final assistance time, said updated assistance time being later than the postponed time and/or data related to updated measurements is predicted to be associated with an updated measurement time later than the final measurement time, said updated measurement time being later than the postponed time.

As a consequence, the user equipment may increase the timing error parameter in the case the final closed loop information reflects a significant timing advance correction (that is, a closed loop correction exceeding the preconfigured correction threshold) yet the user equipment does not have an upcoming opportunity to obtain updated open loop information in order to further quantify, infirm or confirm such closed loop correction before sending the signal. That is notably the case if updated open loop information is predicted to be obtained, received or applied after the postponed time of transmission. In such case, the user equipment is aware that despite requiring updated information, such updated information will not be obtained in time for determining the updated value to be used as timing advance for sending the signal. Thus, the updated value to be used as timing advance will not be as accurate as it would be by relying of the updated open loop information, leading to an increased timing error parameter.

By a correction parameter, it is understood a timing advance correction (or adjustment) value provided by the network, notably via a timing advance command. Such threshold value may be expressed in a number of timing advance correction units. Such correction parameter may notably be delimited by the timing advance value contained in the MAC-CE timing advance command and may thus have a delimited correction size. The user equipment notably relies on such correction parameter to determine a timing advance value. Such correction parameter quantifies the closed loop information (or the closed loop correction of the timing advance).

By a preconfigured correction gap threshold, it is understood a threshold value configured by the network or by the user equipment. Such threshold value may notably reflect how significant (or substantial) the closed loop correction is. For example, if the correction parameter is below the preconfigured correction threshold, the closed loop correction may be considered neglectable whereas if the correction parameter is above the preconfigured correction threshold, the closed loop correction may be considered significant.

According to an embodiment of the present disclosure, data related to the assistance information and data related to measurements providing values of a self-correction parameter being used by the user equipment to determine the values of timing advance, data related to timing advance commands providing values of a correction parameter being used by the user equipment to determine the values of timing advance,

and the update of the timing error parameter consists in decreasing the value of the timing error parameter:
- if a gap between the final command time and a current time is below a preconfigured alternate first threshold,

and the value of the correction parameter determined based on the data related to the final timing advance command is below a preconfigured alternate correction threshold,
- or if the final command time precedes one of the final assistance time and the final measurement time,

and the value of the self-correction parameter determined based on the data related to the final assistance information and/or on the data related to the final measurements is below a preconfigured alternate self-correction threshold,

and a gap between the final assistance time and/or the final measurement time and the current time is below a preconfigured alternate second threshold.

As a consequence, the user equipment may decrease the timing error parameter in the case the final closed loop information or the final open loop information reflects a neglectable timing advance correction (that is, a correction below a preconfigured alternate correction or self-correction threshold), plus such final information is not considered obsolete (that is, the final assistance time, the final command time and/or the final measurement time are below preconfigured alternate first and/or second thresholds). In such case, the user equipment determines that the updated value to be used as timing advance may correspond to the current value used as timing advance which is determined based on the final information at the disposal of the user equipment. Thus, the user equipment determines that the updated value of timing advance determined relying on such final information is accurate and the timing error parameter is decreased.

In particular, the preconfigured alternate first or second thresholds as well as the preconfigured alternate correction or self-correction thresholds may be equal to or differ from the preconfigured first or second thresholds as well as the preconfigured correction or self-correction thresholds respectively. Such thresholds may notably differ if the update of the timing error parameter is normalized or regulated so that the timing error parameter does not take negative values. Such thresholds may also be different depending on the accuracy level of the timing advance computation process performed by the user equipment: for example, decreasing the timing advance error may require more reliability than increasing the timing advance error. In the rest of the disclosure and for the sake of simplicity, the preconfigured alternate first (respectively second) threshold and the preconfigured first (respectively second) threshold are considered to be equal and the term "preconfigured first (respectively second) threshold" is used. Similarly, the preconfigured alternate correction (respectively self-correction) threshold and the preconfigured correction (respectively self-correction) threshold are considered to be equal and the term "preconfigured correction (respectively self-correction) threshold" is used.

According to an embodiment of the present disclosure, the time-related parameter being associated to a transmission deadline time, and the transmission time of the signal is selected to precede the transmission deadline time.

As a consequence, the user equipment may select the transmission time under the constraint of latency requirements to be met by the user equipment, for example in the context of SLAs of services served by the user equipment.

By a transmission deadline time, it may be understood a latest time slot at which the signal must be sent to the base station. In such case, the time-related parameter may be a time slot or a time interval reflecting the latency level of the signal to be transmitted to the base station.

According to an embodiment of the present disclosure, the method further comprises performing updated measurements at an updated measurement time if a third time gap between the final measurement time and the final assistance time exceeds a preconfigured third gap threshold.

As a consequence, the proposed method also ensures that the open loop information used by the user equipment for determining the updated value to be used as timing advance is coherent, notably between the timing of the assistance information obtained by the user equipment from the network and the timing of measurements performed by the user equipment. For example, when determining a propagation delay between the satellite and the user equipment, the user equipment may require data related to the location of the user equipment on the one hand, and data related to the position of the satellite on the other hand. The former may be obtained via measurements while the latter may be obtained via assistance information. Such information yet has to be time-coherent (more precisely, their time gap, referred to as the third time gap, may not exceed a preconfigured third gap threshold) so that the comparison of such user equipment location and satellite position data makes sense. Such preconfigured third gap threshold may be configured by the user equipment or the network. Such preconfigured third gap threshold may correspond to a one-slot gap for example. Such preconfigured third gap threshold may be smaller than both the preconfigured first and second gap thresholds for example.

In another aspect of the present disclosure, it is also proposed a user equipment configured to send a signal to a base station using an updated value of timing advance, the user equipment being connected to the base station, the base station corresponding to a cell supported by a non-geostationary orbit satellite of a satellite communication network,

the user equipment being able to determine values of timing advance based on at least:

- data related to assistance information received by the user equipment associated with assistance times,

- data related to measurements obtained by the user equipment associated with measurement times,

- data related to timing advance commands received from the network associated with command times,

the user equipment comprising a processor and a non-transitory computer readable medium comprising instructions stored thereon, which, when executed by the processor, configure the user equipment to

select a transmission time of the signal between :

-- a target time of transmission of the signal, and

-- a postponed time later than the target time,

transmit the signal to the base station at the transmission time using the updated value of timing advance,

wherein the selected transmission time is chosen on the basis of a combination of at least two elements among at least:

- a time-related parameter,

- data related to a final timing advance command associated with a final command time,

- data related to final measurements associated with a final measurement time,

- data related to final assistance information associated with a final assistance time,

- data related to the final measurement time,

- data related to the final command time, and

- data related to the final assistance time.

In another aspect of the present disclosure, it is also proposed a computer program product comprising program instruction code stored on a computer-readable medium for the execution of the method as aforementioned.
In another aspect of the present disclosure, it is also proposed a non-transitory readable computer medium storing instructions of a computer program, said computer program causing the implementation of the method as aforementioned when the program is executed by a processor.

**Brief Description of Drawings**

Other features, details and advantages will be shown in the following detailed description and on the figures, on which:

- **Fig. 1** illustrates an overall architecture of a satellite communication network in an embodiment of the present disclosure.

- **Fig. 2** illustrates an overall architecture of a satellite communication network in an embodiment of the present disclosure.

- **Fig. 3** is a flowchart showing steps for sending a signal to a satellite communication network.

- **Fig. 4** is a flowchart showing steps for sending a signal to a satellite communication network.

- **Fig. 5** illustrates a timeline of signals received and emitted by a user equipment in an embodiment of the present disclosure.

- **Fig. 6** illustrates a timeline of signals received and emitted by a user equipment in an embodiment of the present disclosure.

- **Fig. 7** illustrates a timeline of signals received and emitted by a user equipment in an embodiment of the present disclosure.

- **Fig. 8** schematizes an overall architecture of a user equipment in an embodiment of the present disclosure.

**Description of Embodiments**

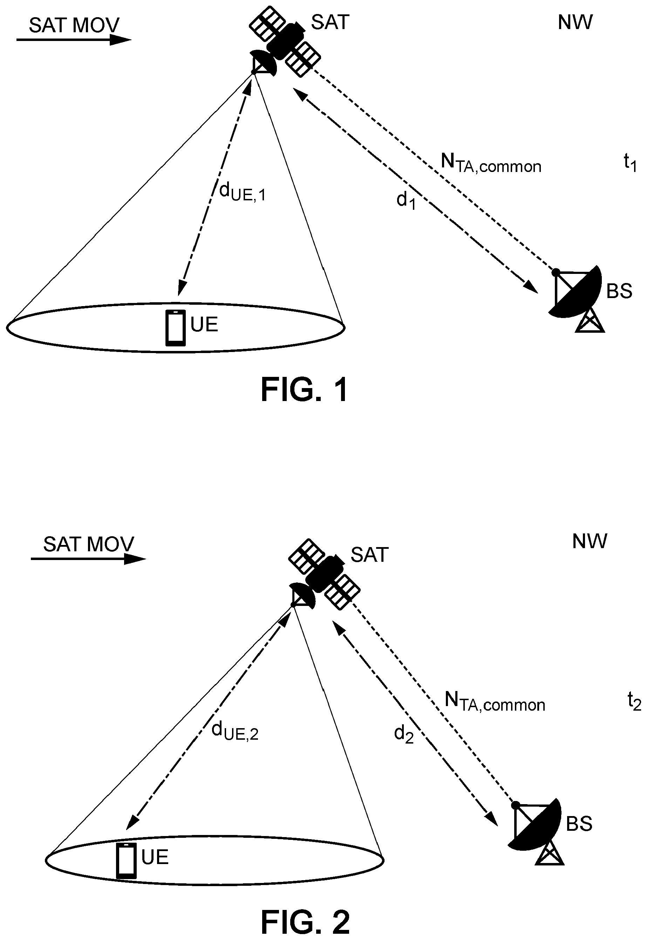

It is now referred to figures 1 and 2. Figures 1 and 2 illustrate an overall architecture of a same part of a satellite communication network NW according to a possible embodiment of the present disclosure, at two distinct times $t_1$ and $t_2$, $t_2$ being later than $t_1$. The present disclosure is not limited to any specific standard, however, for the sake of simplicity, the present disclosure will be described in the context of the New Radio (NR) standard.
The satellite communication network NW comprises at least one satellite SAT. Such satellite SAT is deployed in a Non-Geostationary Satellite Orbit (or NGSO) such as a Low-Earth Orbit (LEO) or Medium-Earth Orbit (MEO). The satellite SAT thus has an altitude between 300 kilometers and 30,000 kilometers with respect to the Earth surface.
The satellite SAT is linked to at least one ground station, or gateway node (not represented on figures 1 and 2) via a feeder link, so that the satellite SAT is linked the core network via the ground station.
The satellite SAT deploys at least one satellite beam. The satellite beam is configured in a specific frequency band so that the satellite may transmit and receive data via the satellite beam according to radio resources allocated in the frequency band configured for the satellite beam. These radio resources may be shared according to a frequency division scheme (for example, Frequency Division multiplexing (FDM) or Orthogonal frequency-division multiplexing (OFDM)) or by a time division scheme (for example, Time-division multiplexing (TDM)) or code division scheme (code division multiplexing (CDM)), polarization multiplexing, or a combination thereof.
The allocation of the radio resources of the satellite beam is achieved by at least one base station BS, also referred to as gNodeB or gNB. Each base station BS manages the radio resources of one or several satellite beams. The base station BS may be located onboard a satellite SAT, so that a distance between the base station BS and the satellite SAT is considered null. The base station BS may also be located on the Earth surface as represented on figures 1 and 2, for example by the ground station linked to the satellite SAT. In such case, the distance between the base station BS and the satellite SAT is not null and may vary as the satellite SAT moves according to the Non-Geostationary Satellite Orbit. Such variation of the distance between the base station BS and the satellite SAT due to the movement of the satellite SAT is notably illustrated by respectively distinct distances $d_1$ and $d_2$ on figures 1 and 2.

Via the one or several satellite beams deployed by the satellite SAT, the satellite SAT projects a footprint on the Earth surface, also referred to as a service area of a coverage zone of the satellite SAT. Such footprint deploys one or several cells, each cell being formed by the deployment of one or several satellite beams. The radio resources allocated in each cell is managed by a base station BS. In other words, being covered by a cell is equivalent to being allocated radio resources by a corresponding base station BS.

Referring to figures 1 and 2, the illustrated satellite communication network NW includes one satellite SAT displaying one satellite beam. The satellite SAT projects a unique cell ( schematized by the grayed out zone on figures 1 and 2) corresponding to a base station BS. In other possible embodiments, the satellite communication network NW may include several satellites SAT and/or the satellite SAT may include several satellite beams and/or projects one or several cells.

In the context of the present disclosure, the satellite SAT of the satellite communication network NW is considered to have a non-geostationary orbit. In other words, the satellite SAT moves with respect to the Earth surface following predefined ephemerides and according to predefined satellite constellation dynamic and network topology. Such ephemerides are for instance known within the core network. As a result, the movement and successive positions of the satellite SAT throughout time is known by the core network and by extension, is accessible to any network entity. A network entity may refer to a satellite SAT, a base station BS or a ground station for example. A network entity does not usually refer to a user equipment UE or to a device served by the network NW. Data related to the movement and successive positions of the satellite SAT throughout time may be exchanged between different network entities of the satellite communication network NW using intersatellite link (ISL) and/or feeder link communication for instance. The movement of the satellite SAT is schematized as an arrow SAT MOV indicating that the satellite SAT moves from the left side to the right side in the part of the satellite communication network NW.

In particular, the movement of the satellite SAT according to a predictable satellite constellation dynamic leads to a movement of the footprint projected by the satellite SAT on the Earth surface in a predictable way. As a consequence, each zone (for example the Earth surface) covered by a cell deployed by the satellite communication network NW will experience a change of coverage due to the non-geostationary nature of the satellite orbit. For a considered zone covered by the satellite communication network NW, the change of coverage will occur according to a predictable timeline and in predictable coverage conditions, depending notably on an architecture of the satellite communication network NW. For example, referring to figures 1 and 2, the gray area representing the cell deployed by satellite SAT moves between times $t_1$ and $t_2$.

In particular, such architecture of the satellite communication network NW may include the fixed or steerable nature of the satellite beams of the satellite SAT. Indeed, in the case of the satellite SAT being equipped with a fixed satellite beam, the satellite beam is unmoving with respect to the satellite SAT. In particular, such fixed satellite beam has a fixed orientation with respect to the satellite SAT while deploying the satellite beam. Thus, the cell deployed by the satellite SAT moves in a progressive way according to the movement of the satellite SAT. In the case of the satellite SAT being equipped with a steerable (or moving) satellite beam, the satellite beam is steered as the satellite SAT moves following its predefined orbit trajectory, such beam steering being adjusted to the movement of satellite SAT so that the cell deployed by such satellite beam is approximately maintained on the same covered zone during a predetermined time. As a result, the cell (or at least a center part of the cell) may be considered immobile in the covered zone for a predetermined time. Such time notably depends on the extent to which the steerable properties of the satellite beam enables the latter to compensate the movement of the satellite SAT, until a given elevation angle between the satellite beam and the Earth surface is reached for instance and above which the satellite beam is switched off and replaced by another satellite beam (not represented on figures 1 and 2). The duration and conditions of coverage under a considered cell deployed by a satellite SAT are thus function of such architecture of the satellite communication network NW. In the context of the present disclosure, either fixed or steerable satellite beams may be considered for the satellite SAT. Figures 1 and 2 illustrate an example of a satellite SAT having fixed satellite beams.

At least one user equipment UE is considered connected to the satellite communication network NW. The user equipment UE may generally refer to a device of the Internet of Things (or IoT) whose connectivity may be served by the satellite communication network NW. The user equipment UE may be located on the Earth surface. The user equipment UE may also be distant from the Earth surface, for example in the case of an on-flight aircraft.

In the context of the present disclosure, the user equipment UE is covered by at least one cell of the satellite communication network NW and may be allocated radio resources by the corresponding base station BS. In another embodiment, the user equipment UE may be covered by several distinct cells corresponding to several respective base stations.

The user equipment UE is considered to be in an RRC_CONNECTED state via a cell corresponding to a base station BS of the network NW. In other words, the user equipment UE has connected to the considered cell by performing an initial access procedure (e.g., a random access procedure or RACH) or a handover procedure.

The user equipment UE is thus able to send and receive signals using radio resources allocated by the base station BS. Such signals may be exchanged with the base station BS. Such signals may also be exchanged with other devices via direct (or sidelink) communications, without relaying such signal via the base station BS.

In a connected state, the user equipment UE is able to transmit control signaling and/or traffic data to the base station BS. For example, the user equipment UE may perform data transmissions, send Scheduling Requests (or SR) and/or send Buffer Status Reports (or BSR) to the base station BS. The user equipment UE is able to perform uplink transmissions.

The traffic data and signaling to be transmitted by the user equipment UE may aim to serve various services, notably in the context of Enhanced Mobile Broadband (eMBB), Massive Machine Type Communications (mMTC) or Ultra Reliable and Low Latency Communication (URLLC) use cases. Such services served by the user equipment UE have Quality of Service (or QoS) requirements, notably regarding reliability and latency. The user equipment UE may thus transmit buffered traffic data to the base station BS and/or various signals (such as SR and BSR signals) before transmitting traffic data.

Scheduling Requests (or SR) and/or Buffer Status Reports (or BSR) may be transmitted by the user equipment UE in the context of data to be transmitted being available in a buffer of the user equipment UE. SR and/or BSR may also be transmitted in the context of periodic reports to be performed by the user equipment UE. More generally, SR and/or BSR may be transmitted in the context of a plurality of events requiring the user equipment UE to transmit information to the network NW or request resource allocation from the network NW.

The user equipment UE may send such signals according to specific time windows (also referred to as *"transmission occasions"* or *"transmission opportunities"*) arranged by the network NW. For example, the network NW may configure specific delimited timing opportunities for performing data transmissions but also for sending SR or BSR signals to the base station BS. Such time windows may be defined by configured grants, semi-configured grants or dynamic grants for performing transmission to the base station BS. Thus, in the case of configured grants, for example in the context of periodic traffic data to be transmitted, the network NW allocates radio resources (e.g., Physical Uplink Shared Channel resources or PUSCH resources) to the user equipment UE for sending BSR messages to the base station BS and/or for performing uplink data transmissions based on scheduled time windows. The network NW may also allocate radio resources (e.g., Physical Uplink Control Channel resources or PUCCH resources) to the user equipment UE for sending SR messages to the base station BS within specifically allocated time windows in order to request PUSCH resource allocation. In the case of dynamic grants, the network NW may allocate radio resources (e.g., PUCCH resources) representing one or several time opportunities at which the user equipment UE may for example send a BSR signal in order to request one dedicated time opportunity to send a data signal.

In a connected state, the user equipment UE is also able to receive signals from at least the base station BS. For example, the user equipment UE may receive system information (or SI), control information, network commands and/or data signals. The user equipment UE is able to receive downlink transmissions.

For example, the user equipment UE may receive System Information Blocks (or SIB) from various network entities (such as base stations of the network NW), via one or several cells covering the location of the user equipment UE. The user equipment UE may receive network information related to satellite ephemeris, epoch times, radio resource configuration information, cell-related information... Such information received from the network NW via the cell(s) covering the location of the user equipment UE is referred to as assistance information. Such assistance information may be specifically received by the user equipment UE, for example as a unicasted signal emitted from the base station BS to the user equipment UE via dedicated downlink signaling. Such assistance information may also be common information sent to several devices including the user equipment UE, for example as groupcasted or broadcasted signals, via broadcast or groupcast channels. For instance, intra-cell assistance information may be received by all devices covered by the same cell.

Such assistance information may be transmitted by the network NW according to a preconfigured periodicity. The content of such assistance information and the preconfigured periodicity of its transmission may notably be implemented by the network entities (e.g., base station BS) via reconfigurations. The user equipment UE then has preconfigured periodic opportunities to retrieve such assistance information. Such periodic opportunities are referred to as assistance times $A_N$. The user equipment UE may also request for assistance information within preconfigured opportunities for assistance information requesting.

The user equipment UE may also receive command (or orders) and adjustment information from the base station BS. In particular, the user equipment UE may receive Timing Advance Commands (or TAC) via the Medium Access Control (or MAC) layer, also referred to as MAC-CE TAC (or MAC Control Element Timing Advance Command).

Such TAC signals may be received by the user equipment UE from the base station BS. Although the times for providing such TAC orders is entirely up to the network NW's decision, in order for the base station BS to be able to estimate the real timing error of the uplink synchronization, it is convenient for the BS to send such command signals after one or several uplink transmissions performed by the user equipment UE to the base station BS. The times at which such TAC signals may be received by the user equipment UE are referred to as command times $C_N$.

Such TAC signals notably include a command value related to a timing advance to be used by the user equipment UE for transmitting signals to the base station BS. Such command value takes 6 bits in the MAC-CE and may thus vary between 0 and 63 characters. The timing advance to be used by the user equipment UE for transmitting signals to the base station BS will be further detailed in the description.

The user equipment UE may also perform measurements, such as measurements of the location of the user equipment UE. To that end, the user equipment UE may be equipped with a Global Navigation Satellite System (or GNSS). The user equipment UE may also use positioning techniques based on radio signal measurement (via the network NW), or hybrid techniques (combining radio measurements and information from integrated sensors), or any other technique to obtain data related to its own position.

Such measurements may be performed concomitantly with New Radio (or NR) signaling. In such case, the user equipment UE may have specific hardware enabling concurrent use of measurement and signaling functions. Such measurements may also be performed at preconfigured time windows (or time opportunities) set by the network NW. In such case, the network NW may provide specific measurement time windows during which the user equipment UE does not receive signals from the network NW and has opportunities to perform measurements. Network-preconfigured measurement times for performing measurements may be set if the user equipment UE hardware does not enable concurrent use of measurement and signaling functions. Measurements may also be performed according to an implementation of the user equipment UE, depending on its requirements as well as on its hardware capabilities. The times at which such measurements may be performed - either depending on the user equipment UE or preconfigured by the network NW - by the user equipment UE are referred to as measurement times $M_N$.

As a consequence, when the user equipment UE is connected to the satellite communication network NW via a cell corresponding to the base station BS, the user equipment UE is able to exchange control and traffic data signals with the base station BS as well as to perform various measurements. However, such exchanges and measurements may be performed providing specific timing requirements. For example, the timing for sending a signal notably depends on :

- preconfigured transmission opportunities set by the network NW,

- latency requirements set by the service level specifications (or SLS), more generally by the service level agreements (or SLA) to be guaranteed by the user equipment UE performing transmissions (e.g., data transmissions).

For example, the timing for receiving a signal notably depends on :

- preconfigured and/or reconfigured periodicities set by the network NW for transmitting assistance information,

- command times $C_N$ when the base station BS transmits TAC signals to the user equipment UE,

- preconfigured requesting time opportunities for the user equipment UE for requesting assistance information and more generally for sending a signal to the base station BS.

For example, the measurement times $M_N$ for performing measurements depends on :

- the hardware capabilities of the user equipment UE,

- preconfigured measurement time windows set by the network NW.

Moreover, in order to send signals to the base station BS via the cell, the user equipment UE requires an adjustment of the timing of the signal to be sent, such time adjustment being referred to as the timing advance TA to be used in the cell. A timing advance TA in a cell refers to a time difference between the sending time of an uplink communication from the user equipment UE through the cell and the reception of a downlink communication through that same cell, from the perspective of the user equipment UE. The timing advance TA is variable and depends on a propagation delay between the user equipment UE and a predefined network reference point, such as the base station BS managing the cell for instance or the satellite SAT supporting the cell, or any reference point between those two points. It is moreover proper to each user equipment UE, depending on its location with respect to the considered network reference point.

The timing advance TA aims at compensating such propagation delay: the user equipment UE, after obtaining such a time advance, advances the time of its uplink transmission through the cell by an amount of time corresponding to the timing advance TA. When each user equipment UE under the coverage of a given cell advances the time of its own uplink transmission through the cell by an amount of time corresponding to its own timing advance TA, it ensures that all uplink transmissions reach the network side (that is, the network reference point as defined) respectively at times corresponding to the radio resources to which these transmissions were assigned. Moreover, at such reference point, both uplink and downlink transmissions are synchronized.

The reference point is set as a parameter of the network NW. For example, the network reference point is set at the base station BS, which is the case for terrestrial communication networks for instance. In that case, implementing the user equipment UE specific timing advance TA at each user equipment UE ensures that all uplink transmissions from such UEs reach the base station BS in a synchronized manner regarding the base station BS and that uplink and downlink transmissions are time-aligned at the base station BS. In another example, the network reference point may be located at the satellite SAT. In that case, implementing the user equipment UE specific timing advance TA at each user equipment UE ensures that all uplink transmissions from such UEs reach the satellite SAT in a synchronized manner regarding the base station BS and that uplink and downlink transmissions are time aligned at the satellite SAT. In another example, the network reference point may be located anywhere on the feeder link linking the satellite SAT and its gateway. Such a network reference point is predefined for a given cell and is fixed with respect to its distances (some being possibly null) to the corresponding base station BS, cell and gateway.

In the context of the present disclosure (notably on figures 1 and 2), the user equipment UE is connected to the satellite communication network NW via a cell corresponding to the base station BS, such base station BS serving the user equipment UE. The user equipment UE has thus performed at least one timing advance synchronization, for example during an initial access procedure via a random access procedure (or RACH procedure). The user equipment UE has thus received at least one Timing Advance Command (or TAC) from the base station BS, for example via a TAC Random Access Response (or TAC-RAR) during the initial access procedure, such Timing Advance Command having provided an initial value related to the timing advance TA to be used by the user equipment UE for connecting to the network NW via the base station BS. Such initial access procedure using an initial value related to the timing advance TA to be used by the user equipment for connecting the base station BS may for example have been performed at a time prior to time ti.

Once the user equipment UE is connected to the network NW, the user equipment UE regularly requires an update of the timing advance when sending signals to the base station BS, in order to maintain an uplink timing synchronization with such base station BS. Indeed, due to the movement of the satellite SAT, of the satellite beam as well as the possible movement of the user equipment UE, the propagation delay between the user equipment UE and the considered network reference point (e.g., set at the base station BS on figures 1 and 2) may vary over time. The value to be used as timing advance TA by the user equipment UE when sending a signal to the base station BS thus also varies and an updated value of timing advance TA to be used in the cell corresponding to the base station BS is required.

In order to update the timing advance TA value to be used when sending a signal to the base station BS in an RRC_CONNECTED state, the user equipment UE may rely on two distinct sources of timing advance adjustment :

- closed loop information, which consists in Timing Advance Commands (TAC) signals received from the base station BS via MAC-CE. Such TAC signals are received by the user equipment UE at times $C_i$ where i corresponds to an integer number. Usually, the user equipment UE applies the received TAC value at a predefined time after having received the TAC signal (e.g. the TAC signal received in slot n is applied starting with slot n+6). From this perspective, in the context of the present disclosure, timing advance commands are associated to command times $C_i$, the command time $C_i$ may be the time when the TAC command is received by the user equipment UE, or the time when the TAC command is applied by the user equipment UE, or more generally the command time $C_i$ may refer to a time related to or associated with the reception of a timing advance command TAC. The rest of the present disclosure will mention "receiving TAC signals at command times $C_i$", yet such times $C_i$ may refer to the times (or time slots) when TAC orders are actually used or applied by the user equipment UE. As aforementioned, a TAC signal is received based on uplink signals previously sent from the user equipment UE to the base station BS. In NR, each TAC signal received via MAC-CE has a fixed size of 8 bits and 6 bits corresponds to the Timing Advance Command. Thus, the user equipment UE is able to receive updated TAC signals as long as the user equipment UE emits uplink signals to the base station BS. The correction of the timing advance TA value is limited to a length of 6 bits in each TAC signal, which limits the amount of timing advance adjustment the user equipment UE may perform on the timing advance TA. In particular, the timing advance adjustment potentially provided by a TAC signal is between 0 and 63 units.

- open loop information, which consists in self-adjustments of the timing advance value computed by the user equipment UE based on the received assistance information from the network NW as well as on measurements performed by the user equipment UE. The assistance information is received by the user equipment UE at assistance times $A_i$ where i corresponds to an integer number. The measurements are performed by the user equipment UE at measurement times $M_i$ where i corresponds to an integer number. Such assistance times $A_i$ and measurement times $M_i$ may also refer to times at which assistance information and measurements are respectively applied by the user equipment UE. More generally, the assistance times $A_i$ and the measurement times $M_i$ may refer to times related to or associated with the obtention of assistance information and measurements respectively. The rest of the present disclosure will mention "obtaining assistance information at assistance times $A_i$" and "obtaining measurements at measurement times $M_i$", yet such times $A_i$ and $M_i$ may refer to the times (or time slots) when assistance information and measurements are actually used or applied by the user equipment UE. As aforementioned, part of the open loop information may be retrieved by the user equipment UE according to a preconfigured periodicity, within specific preconfigured assistance time windows and/or depending on hardware capabilities of the user equipment UE. In particular, the user equipment UE is able to perform bigger adjustments of the timing advance TA value using the open loop information with respect to adjustments using closed loop information. Indeed, as aforementioned, closed loop information has a limited information size defined by the 6-bit-size of each TAC signal, whereas the open loop information enables the user equipment UE to perform a self-adjustment - thus a more flexible adjustment with respect to TAC-related adjustment - of the timing advance TA value.

More generally, the timing advance TA value applied by the user equipment UE in a cell corresponding the base station BS may be expressed as :

$$TA = \left(N_{TA} + N_{TA,UE-specific} + N_{TA,common} + N_{TA,offset}\right) \times T_c$$

where :

- *TA* is the updated timing advance value (e.g., in milliseconds (ms) or nanoseconds (ns)),

- $N_{TA}$ is the command value of the timing advance TA provided by closed loop,

- $N_{TA,UE-specific}$ is a self-adjustment value determined by the user equipment UE based on open loop,

- $N_{TA,common}$ is a preconfigured value set by the network NW depending on a propagation delay between the satellite SAT and the considered network reference point,

- $N_{TA,offset}$ is an offset value specified to the user equipment UE,

- $T_c$ is a chip time. Such chip time may be fixed or configurable. For example, in 3GPP NR standard, this value is fixed at 0,509 nanoseconds (ns).

Thus, while being in RRC_CONNECTED mode, the user equipment UE has, at each considered time, a current value of timing advance TA. Such current value of timing advance TA may for example correspond to the last timing advance TA value computed by the user equipment UE at, or prior to, such considered time. Such current value of timing advance TA may for example correspond to the last timing advance TA value used by the user equipment UE when sending a signal to the base station BS. Such current value of timing advance TA notably relies, at such considered time, on :

- a last (or final) command value $N_{TA,N}$ determined based on at least one last TAC signal received by the user equipment UE from the base station BS and associated to a last (or final) command time $C_N$,

- a last (or final) self-adjustment value $N_{TA,UE-specific,N}$ determined based on:

    -- last (or final) assistance information received by the user equipment UE from one or several network entities (e.g., the base station BS) and associated with a last (or final) assistance time $A_N$,

    -- last (or final) measurements performed by the user equipment UE and associated with a final measurement time $M_N$.

A command value $N_{TA,i}$ may also be referred to as a correction parameter or a closed loop correction. A self-adjustment value $N_{TA,UE-specific,i}$ may also be referred to as a self-correction parameter or an open loop correction.

In particular such last self-adjustment value $N_{TA,UE-specific,N}$ depends on a location of the user equipment UE and a distance $d_{UE,1}$, $d_{UE,2}$ of the user equipment UE with respect to the satellite SAT. Such last self-adjustment value $N_{TA,UE-specific,N}$ may regularly be updated by the user equipment UE based on assistance information, for example when the network NW transmits System Information Blocks (or SIB) within the cells, according to a configured periodicity. Such periodicity may typically be in the order of several seconds. Such last self-adjustment value $N_{TA,UE-specific,N}$ may also be updated by the user equipment UE based on GNSS measurements performed by the user equipment UE, whose frequency and measurement times $M_i$ may depend on the user equipment UE capabilities and implementation.

The preconfigured value $N_{TA,common}$ used by the user equipment UE for determining the value of timing advance TA at a considered time notably depends on a distance between the satellite SAT and the network reference point. In particular, if the network reference point is set at the satellite, such preconfigured value $N_{TA,common}$ is constant and null. Such preconfigured value $N_{TA,common}$ may be updated by the user equipment UE when the network NW transmits System Information Blocks (or SIB) within the cells, according to a configured periodicity, or when the user equipment UE receives Radio Resource Control parameters for example.

For example, referring to figure 1, it is considered that, at time ti, the user equipment UE has determined a current value used as timing advance TA in the cell. Such current value used as timing advance TA may notably depend on a distance $d_{UE,1}$ between the location of the user equipment UE at time ti, the position of the satellite SAT at time $t_1$ as well as of the cell within the network NW and the distance $d_1$ between the satellite SAT and the network reference point (corresponding to the base station BS on figure 1) at time $t_1$. Providing such situation of the satellite communication network NW, the current value used as timing advance TA in the cell at time $t_1$ may have been determined by the user equipment UE based on open loop and closed loop information obtained by the user equipment UE at last command, assistance, and measurement times $C_N$, $A_N$, $M_N$ received at times prior to time $t_1$.

The actual real-time position of the satellite SAT at a given time - such as time $t_1$ - may not be known by the user equipment UE with a high accuracy. The user equipment UE may compute an approximate location of the satellite SAT at a given time, for example by relying on assistance information and/or predefined equations representative of the satellite SAT's trajectory. For example, the user equipment UE may use a satellite SAT position (e.g. transmitted by the network NW by SIB) at a previous time (e.g. ephemerides at an associated Epoch time) and predefined formulae to estimate the satellite SAT position at the given time. By the position of the satellite SAT, the current disclosure may refer to the approximate position of the satellite SAT as computed by the user equipment UE, or to the exact position of the satellite SAT if it is known by other means, or to a position related to, or representative of, or derived from the actual position of the satellite SAT at a current or at a previous time.

Referring to figure 2, the situation of such part of the satellite communication network NW at time $t_2$ has evolved with respect to time $t_1$. Indeed, the satellite SAT has moved according to preconfigured satellite ephemerides SAT MOV, thus modifying the distance $d_{UE,1}$ of the user equipment UE with respect to the satellite SAT at time $t_1$ to a new distance $d_{UE,2}$ and the distance $d_1$ between the satellite SAT and the network reference point at time $t_1$ to a new distance $d_2$. In another embodiment, the situation of such part of the satellite communication network NW may have changed at time $t_2$ also due to a movement of the user equipment UE within a fixed location of the cell between times $t_1$ and $t_2$. In such case, the distance $d_{UE,1}$ between the user equipment UE and the satellite SAT is modified. The distance $d_1$ between the satellite SAT and the network reference point may or may not change between times $t_1$ and $t_2$, depending on how the reference point is defined. Considering such evolution of the situation of the satellite communication network NW between times $t_1$ and $t_2$, the current value used as timing advance TA in the cell at time $t_1$ has potentially become inaccurate for sending a signal to the base station BS by time $t_2$. Indeed, such current value of timing advance TA may no longer enable to compensate the propagation delay between the user equipment UE and the network reference point at time $t_2$ and thus, would the user equipment UE use the current value of timing advance TA to send a signal S by time $t_2$, there is a risk that such signal S fails to reach the network side (e.g., the base station BS) at the time corresponding to the resources to which such signal S was assigned.

If an inaccurate value of timing advance TA considerably fails to compensate the propagation delay between the user equipment UE and the network reference point (for example, if the current value of timing advance determined for time $t_1$ is reused at a later time $t_2$), a timing desynchronization between uplink signals expected from the user equipment UE and other UE equipments occurs at the network side, leading to inter-user interference. Moreover, uplink signals actually received from the user equipment UE by the network side and downlink signals emitted by the network side also may occur. As a result, the quality of the link between the user equipment UE and the network NW degrades, and if several uplink and/or downlink messages fail to be decoded, the user equipment UE may consider that the connection to the network NW is lost, which is referred to as a Radio Link Failure (or RLF). If a RLF occurs, there is a service interruption and, moreover, the user equipment UE may initiate another random access procedure (or RACH procedure) in order to attempt a reconnexion to the network NW. Such repetition of a random access procedure thus wastes a significant amount of time and resources on both the user equipment UE and the network sides.

In such context, the present disclosure proposes a method performed by the user equipment UE for sending a signal S to the base station BS using an updated value of timing advance TA.

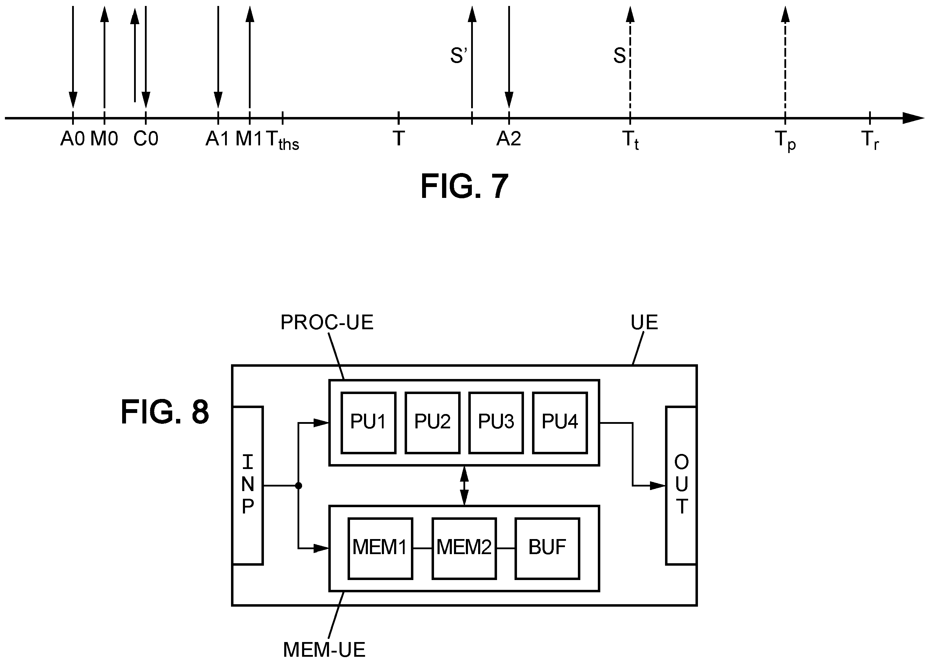

In the context of the present disclosure, a schematization of an overall structure of a user equipment UE able to perform such method is schematized on figure 8.

The user equipment UE comprises at least input communication means INP, a storage memory unit MEM-UE, a processing unit PROC-UE and output communication means OUT. In an embodiment, input communication means INP and output communication means OUT may be merged within a single communication unit.

The input communication means INP enables the user equipment UE to receive signals from other entities including network entities, such as base stations of the satellite communication network NW. It may optionally enable the user equipment UE to receive signals from other devices and user equipments, for example via sidelink communication. To that end, the input communication means 1 may comprise receivers, such as radiofrequency antennas, demultiplexers etc. In particular, the input communication means 1 may comprise New Radio (or NR) hardware.

The storage memory unit MEM-UE enables the user equipment UE to store information received via the input communication means INP and/or processed by the processing unit PROC-UE. In particular, the storage memory unit MEM-UE may comprise a non-volatile memory unit MEM1, a volatile memory unit MEM2 (e.g., a Random Access Memory) and a buffer unit BUF. The buffer unit BUF may for example store traffic data to be transmitted by the user equipment UE.

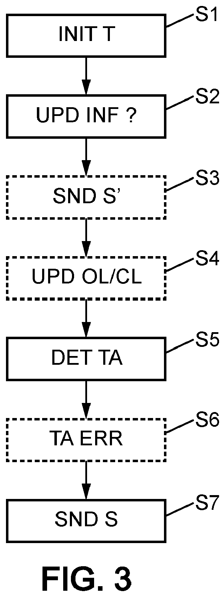

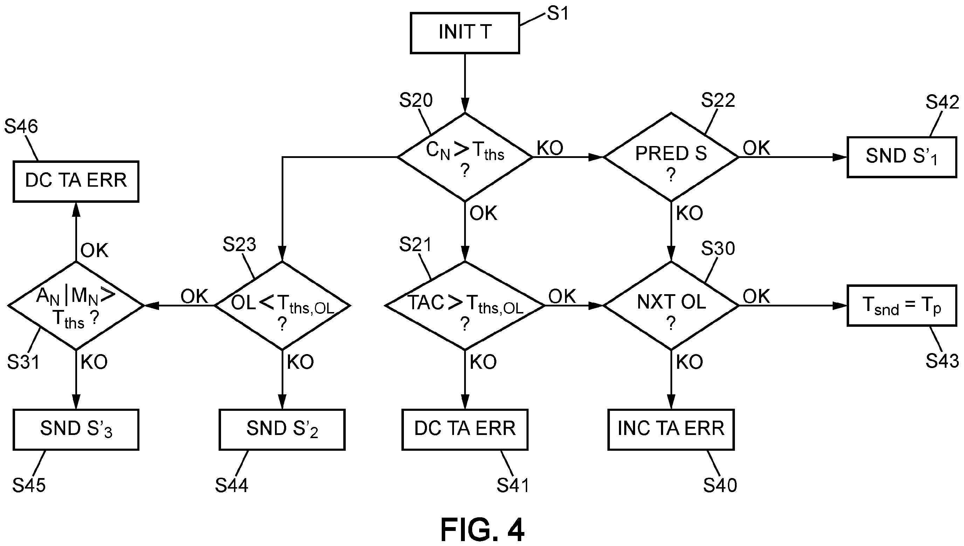

The processing unit PROC-UE enables the user equipment UE to process information received via the input communication means INP as well the information stored by the storage memory unit MEM-UE, resulting in sending signals, compute values, decide on actions etc. In particular, the processing unit PROC-UE of the user equipment UE is able to perform the method proposed in the present disclosure and that will be further detailed in the description of figures 3 and 4. To that end, the processing unit PROC-UE may for example comprise a general processing unit PU1, a decision unit PU2, a timing advance computing unit PU3 and a transmission unit PU4. The general processing unit PU1 may be able to pre-process and/or process data received via the input communication means INP as well as stored in the storage memory unit MEM-UE. For example, the general processing unit PU1 may timestamp received and/or stored information. The general processing unit PU1 may manage the overall functionalities and applications of the user equipment UE. The decision unit PU2 may be able to trigger any decision taken by the user equipment UE such as emitting a signal, computing a timing advance value, performing a random access procedure, postponing any of the latter etc. The timing advance computing unit PU3 is able to determine an updated value to be used as timing advance TA in a cell. The transmission unit PU4 is able to emit a signal S, S', such signal S, S' being for example a data signal or a control signal. Such transmission unit PU4 notably emits the signal S, S' via the output communication means OUT, which is able to send the signal S, S' emitted by the transmission unit PU4. Such transmission unit PU4 may perform transmission such as uplink transmission or optionally sidelink unicast, groupcast and/or broadcast transmissions. The output communication means OUT may comprise transmitters, multiplexers etc.

It is now referred to figure 3. Figure 3 represents steps for transmitting a signal S to the base station BS using an updated value of timing advance TA according to the present disclosure.

At a step S1, the user equipment UE intends to send a signal S to the base station BS the user equipment UE is connected to, via the cell corresponding to such base station BS. Such intention to send a signal S may be triggered by various events on the user equipment UE side. For example, the intention to send a signal S may be triggered by the availability of data buffered in the buffer unit BUF of the user equipment UE, by a timer of the user equipment UE, by a periodic report to be transmitted to the network NW, by a requirement to retrieve information or be allocated resources by the network NW etc. Such step S1 may occur at a time T, also referred to as the current time T.

At a step S2, in anticipation of the signal S to be sent, the user equipment UE may gather information to be used for sending such signal S. In particular, the user equipment UE may obtain at step S2, data related to a current value of timing advance in the cell. Such data related to a current value of timing advance in the cell may notably comprise :

- the lastly received (or the lastly applied closed loop information, with respect to current time T : the user equipment UE may, at step S2, consider the last (or final) TAC signal received from the base station BS associated with a respective last command time $C_N$,

- the lastly obtained open loop information, with respect to current time T : the user equipment UE may, at step S2, consider the last (or final) assistance information signals retrieved from one or several base stations associated with a last assistance time $A_N$. The user equipment UE may also, at step S2, process the last (or final) measurements associated with a last measurement time $M_N$,

- preconfigured parameters required for determining a timing advance value.

In particular, at step S2, the user equipment UE may determine whether such data related to the current value of timing advance in the cell is sufficient and relevant, considering the current time T, in order to obtain the value to be used as a timing advance TA in the cell when sending the signal S. To that end, the user equipment UE may compare the last command time $C_N$, assistance time $A_N$ and measurement time $M_N$ with one another. For example, the user equipment UE may compare the last assistance time $A_N$ with the last measurement time $M_N$ so as to evaluate the consistency of the final open loop information. The time gap between the last assistance time $A_N$ and the last measurement time $M_N$ may notably be compared with a preconfigured threshold, also referred to as the preconfigured third threshold. The user equipment UE may also compare the last command times $C_N$, assistance times $A_N$ and measurement times $M_N$ with respect to the current time T. The user equipment UE may also compare the last command time $C_N$, assistance time $A_N$ and measurement time $M_N$ with respect to a predefined threshold time $T_{ths}$ (or a predefined threshold ths) known by the user equipment UE. Such predefined threshold time $T_{ths}$ may also be referred to as a validity time or a threshold time. Such time comparisons may notably aim to determine whether the data related to the current value of timing advance TA in the cell should be considered obsolete, notably with respect to the current time T. In particular, if any of the last command time $C_N$, assistance time $A_N$ and measurement time $M_N$ is prior to the validity time $T_{ths}$ (or equivalently, if a time gap between any of the last command time $C_N$, assistance time $A_N$ and measurement time $M_N$ and the current time T exceeds the predefined threshold ths), the user equipment UE may determine that the current value of timing advance in the cell is obsolete with respect to the current time T. The validity time $T_{ths}$ may be predefined in a dynamic way, so that such validity time $T_{ths}$ may vary with the current time T. For example, if the current time T is defined as a given time slot, the validity time $T_{ths}$ may be defined as the time slot prior to the given time slot by ten slots.

In an embodiment, the final command time $C_N$ may be compared with a preconfigured first threshold. The final timing advance command associated with the final command time $C_N$ is then considered to be obsolete closed loop information if the final command time $C_N$ is prior to the preconfigured first threshold. Similarly, the final assistance time $A_N$ and/or the final measurement time $M_N$ may be compared with a preconfigured second threshold. The final assistance information and/or the final measurements respectively associated with the final assistance time $A_N$ and/or the final measurement time $M_N$ is then considered to be obsolete open loop information if the final assistance time $A_N$ and/or the final measurement time $M_N$ is prior to the preconfigured second threshold. In the rest of the disclosure, the preconfigured first and second thresholds are considered to be equal and a referred to as the validity time $T_{ths}$. Yet, in another embodiment, such thresholds may differ, notably in the case of different time tolerances between closed loop and open loop information.

At step S2, the user equipment UE may also process the final closed loop information and the final open loop information, so as to estimate a required size, value or scale of a timing advance adjustment with respect to the current value of timing advance TA. To that end, the user equipment UE may estimate a value of the timing advance adjustment with respect to the current value of timing advance TA used in the cell and compare such value of the timing advance adjustment with a threshold adjustment value $N_{ths}$. In particular, if the estimates required value of timing advance adjustment exceeds the threshold adjustment value $N_{ths}$, the user equipment UE determines that a significant timing advance correction is required for the current value of timing advance in anticipation of sending the signal S.

In particular, such timing advance adjustment comprises a timing advance adjustment indicated by the final closed loop information, also referred to as the final closed loop correction, or the correction parameter. Such timing advance adjustment also comprises a timing advance adjustment indicated by the final open loop information, also referred to as the final open loop correction, or the self-correction parameter. The comparison of the timing advance adjustment with the threshold adjustment value $N_{ths}$ may then consist in respectively comparing the correction parameter with a preconfigured correction threshold and comparing the self-correction parameter with a preconfigured self-correction threshold. Such preconfigured correction and self-correction thresholds aim at quantifying how significant the open loop and closed loop corrections respectively are. Thus, if the correction parameter contained in the final timing advance command exceeds the preconfigured correction threshold, it means that the final timing advance command indicates a significant (or substantial) timing advance adjustment. Similarly, if the self-correction parameter obtained from the final measurements and/or the final assistance information exceeds the preconfigured self-correction threshold, it means that the final assistance information and/or the final measurements indicates a significant (or substantial) timing advance adjustment. In the rest of the disclosure and for the sake of simplicity, the timing advance adjustment will be compared to the threshold adjustment value $N_{ths}$, yet it is understood that such comparison may be performed at the scale of open loop and closed loop information.

As a consequence, during step S2, the user equipment UE determines whether the user equipment UE requires updated information for determining an updated value of timing advance TA in the cell for sending the signal S. In other words, the user equipment UE determines at step S2, whether, based on the stored information in the storage memory unit MEM-UE enabling the determination of the current value of timing advance, the signal S may be emitted without leading to a timing desynchronization on the network side.

If the user equipment UE determines that there is no need to obtain updated closed loop and/or open loop information in order to compute the updated value of timing advance TA in the cell for sending the signal S, the user equipment UE then determines, at step S2, a transmission time $T_{snd}$ corresponding to a time opportunity configured by the network NW for sending the signal S. In particular, the user equipment UE may select the time of transmission $T_{snd}$

as the immediate next time opportunity to transmit the signal S with respect to the current time T. Such immediate next time opportunity to transmit the signal S with respect to the current time T is also referred to as the target time of transmission $T_t$.

In such case, after determining the transmission time $T_{snd}$ for sending the signal S at step S2, the user equipment UE determines, at a step S5, the updated value to be used as timing advance TA in the cell when sending the signal S. In particular, such value may be determined as corresponding to the current value of timing advance TA in the cell (e.g., previously computed by the user equipment UE, and/or used for sending a signal preceding the signal S). Then, at a step S7, the user equipment UE eventually sends the signal S to the base station BS at the target time $T_t$ using the current value used as timing advance in the cell as the updated value to be used as timing advance TA in the cell.

However, in the context of the present disclosure, the user equipment UE may determine, at step S2, that the current value of timing advance in the cell is obsolete with respect to the current time T. The user equipment UE may also determine, at step S2, that a significant timing advance correction (or adjustment) is required for the current value of timing advance in anticipation of sending the signal S. In other words, the user equipment UE determines at step S2 that the determination of the updated value to be used as timing advance TA in the cell requires updated closed loop and/or open loop information with respect to the lastly received closed loop and/or open loop information (that is, with respect to the final timing advance command, and/or the final assistance information, and/or the final measurements). Based on such determination that the computation of the updated value to be used as timing advance TA for sending the signal S in the cell requires updated closed loop and/or open loop information, the user equipment UE determines whether and/or when such required information update may be obtained by the user equipment UE. The user equipment UE also determines possible latency requirements attached to the sending of the signal S. For example, the sending of the signal S may have to be performed in the context of specific Service Level Agreements (or SLA) guaranteed by the user equipment UE and/or more generally before a predefined transmission deadline time $T_r$.

Considering the requirement for updated closed loop and/or open loop information as well as possible latency requirements and/or other time constraints attached to the sending of the signal S as aforementioned, the user equipment UE selects, at step S2, the transmission time $T_{snd}$ of the signal S among at least two distinct time opportunities $T_t$, $T_p$ configured by the network NW for sending the signal S. In particular, the user equipment UE may select the transmission time $T_{snd}$ between :

- the immediate next (or upcoming) time opportunity to transmit the signal S with respect to the current time T, also referred to as the target time of transmission $T_t$, and

- a further next time opportunity to transmit the signal S later than both the current time T and the target time of transmission $T_t$, also referred to as the postponed time of transmission $T_p$.

Such transmission time $T_{snd}$ is expressed as a slot index or a symbol index with respect to a predefined reference time. The criteria for selecting such transmission time $T_{snd}$ will be further detailed in the description of figure 4.

At a step S3, the user equipment UE may, in some embodiments as will be further detailed in the description of figure 4, emit a supplementary signal S', also referred to as a support signal S', distinct from the signal S. Such support signal S' may notably be a control signal sent to the base station BS. Such support signal S' may aim at obtaining updated closed loop and/or open loop information to be used for determining the updated value to be used as timing advance TA for sending the signal S in the cell. The time for emitting such support signal S', also referred to as the support time, may depend on the target time of transmission $T_t$. In an embodiment, the time for emitting such support signal S' may be prior to the target time of transmission $T_t$. In particular, the time for emitting such support signal S' may be prior to the postponed time of transmission $T_p$. In an embodiment, the time for emitting such support signal S' may be between the target time of transmission $T_t$ and the postponed time of transmission $T_p$. For example, the user equipment UE may, at step S2, select the transmission time $T_{snd}$ to be the postponed time of transmission $T_p$ and may send the support signal S' after the target time of transmission $T_t$ yet before postponed time of transmission $T_p$. The support signal S' may be emitted during preconfigured time windows (or time opportunities) set by the network NW enabling the user equipment US to send such support signal S' to the base station BS. Such preconfigured time windows for sending the support signal S' may be similar or different than the time windows for sending the signal S. Such support signal S' may notably be emitted using the current value used as timing advance TA in the cell. Such value of timing advance used for sending the support signal S' is referred to as the support value of timing advance. Such support signal S' may for example request assistance information such as specific content from the base station BS. Such support signal S' may for example request an update of the TAC value. Such support signal S' may be emitted so that the base station BS may transmit an updated TAC signal to the user equipment UE, for example based on the reception timing of the support signal S' on the network side, or on any other measurements, or on any implementation-related decisions at the network side. Such signal S' may also correspond to updated measurements performed by the user equipment UE. Such signal S' may also be a request to validate the timing advance value used for sending S' (e.g., the current value of timing advance).

At a step S4, in some embodiments as will be further detailed in the description of figure 4, the user equipment UE may receive updated closed loop and/or open loop information. Such reception of closed loop and/or open loop information at step S4 may notably occur following an emission of the support signal S' at step S3. In particular, such updated closed loop and/or open loop information may be determined on the network side, for example based on the support signal S' emitted by the user equipment UE at step S3. In particular, updated open loop information may also be retrieved by the user equipment UE without requiring the emission of the support signal S' at step S3. Such updated closed loop and/or open loop information may be received and/or retrieved by the user equipment UE before the target time of transmission $T_t$.

In another embodiment, steps S3 and S4 may be performed before the user equipment UE selects the transmission time $T_{snd}$, that is before step S2. Such transmission time $T_{snd}$ may indeed be selected once the user equipment UE obtains the updated closed loop and/or open loop information to be used for determining the updated value to be used as timing advance TA for sending the signal S in the cell, providing that the latency requirements for sending the signal S enables the user equipment UE to do so. The selection of the transmission time $T_{snd}$ at step S2 may notably occur after the expiration of a time limit after the sending of the support signal S' at step S3. For example, the user equipment UE may select the transmission time $T_{snd}$ depending on the reception or non-reception of updated open loop and/or closed loop information at step S4 following the sending of the support signal S' at step S3.

At a step S5, the user equipment UE then determines the updated value to be used as timing advance TA for sending the signal S in the cell at the selected transmission time $T_{snd}$. As aforementioned, in an embodiment, such updated value to be used as timing advance TA for sending the signal S at the selected transmission time $T_{snd}$ may correspond to the current value of timing advance, that is the timing advance value used by the user equipment UE for sending its last signal to the base station BS. In particular, such current value of timing advance relies on the final timing advance command, the final assistance information and the final measurements (more generally, on the most up-to-date information at the disposal of the user equipment at the current time T). Such case may for example occur if the user equipment UE did not receive updated open loop and/or closed loop information at step S4. The user equipment UE may determine the updated value of timing advance TA without relying on updated closed loop and/or open loop information, either because such updated closed loop and/or open loop information is not considered to be required by the user equipment UE for determining an accurate updated value of timing advance TA, or because the latency requirements for sending the signal S do not enable the user equipment UE to wait for such updated closed loop and/or open loop information. Such appreciation of the updated open loop and/or closed loop information will be further detailed in the description of figure 4.

In another embodiment, such updated value to be used as timing advance TA may be determined at step S5 based on updated closed loop and/or open loop information received at step S4. Embodiments enabling the user equipment UE to consider the obtention of such updated closed loop and/or open loop information for determining the updated value to be used as timing advance TA for sending the signal S will be further detailed in the description of figure 4.

At an optional step S6, the user equipment UE may also estimate a value related to a timing advance error, also referred to as a timing error parameter, of the updated value of timing advance TA as determined at step S5. Indeed, the user equipment UE may self-implement an incremental or differential algorithm so as to determine a precision and/or relevance of the timing advance computing for example. Thus, after each value of timing advance TA determined by the user equipment UE at step S5, the user equipment UE may for example increase or decrease a stored value representing an accumulated error in computing the timing advance value during an RRC_CONNECTED mode of the user equipment UE for instance. The criteria for increasing or decreasing such timing error parameter will be further detailed in the description of figure 4.

Eventually, at a step S7, the user equipment UE sends the signal S to the base station BS at the selected transmission time $T_{snd}$ using the updated value of timing advance TA in the cell as determined at step S5.

It is now referred to figure 4. Figure 4 is a flowchart representing steps performed by the user equipment UE for sending a signal S to the base station BS using an updated value of timing advance TA. In particular, steps of figure 4 further detail the proposed method of figure 3, notably regarding:

- the selection of the transmission time $T_{snd}$ and especially the choice of the user equipment UE, in some embodiments, to select a postponed time of transmission $T_p$ over a target time of transmission $T_t$,

- the perspective of obtaining updated closed loop and/or open loop information, possibly triggered by the user equipment UE by sending a support signal S' to the base station BS,

- the implementation of a timing error parameter by the user equipment UE.

At a step S1 as aforementioned, the user equipment UE intends to send a signal S to the base station BS. In particular, such signal S is intended to be sent using an updated value of timing advance TA in the cell, in order to compensate, as accurately as possible, the propagation delay between the user equipment UE sending the signal S and the network reference point receiving such signal S (which is considered to be the location of the base station BS in the context of the present disclosure). In the proposed method, the user equipment UE will further proceed to, based on the criteria further detailed in figure 4:

- select the transmission time $T_{snd}$ of the signal S,

- possibly send a support signal S' distinct from the signal S, and

- determine the updated value of timing advance TA in the cell to be used for sending the signal S.

At a step S20, the user equipment UE determines a first time gap between the final command time $C_N$ associated with the final timing advance command received from the base station BS (via the final closed loop information), and the current time T. Such first time gap is then compared with a preconfigured first gap threshold known by the user equipment UE. Equivalently, the final command time $C_N$ is compared with the validity time $T_{ths}$. If, at step S20, such final command time $C_N$ is prior to the validity time $T_{ths}$ (or equivalently, if the first time gap between the last command time $C_N$ and the current time T exceeds the preconfigured first gap threshold), the user equipment UE determines that the last TAC signal (and thus the correction parameter related to timing advance command value contained in such last TAC signal, also referred to as the final closed loop correction) is obsolete at the current time T. In such case, the user equipment UE determines that it requires updated information for relevantly determining the updated value to be used as timing advance TA for sending signal S. In particular, in such case, the user equipment UE determines that the updated value to be used as timing advance TA for sending signal S should differ from the current timing advance value.

If the user equipment UE determines, at step S20, that it requires updated information due to an obsolescence of the last TAC signal, the user equipment UE determines, at a step S22, whether a transmission time $T_{snd}$ of the signal S may be predictable, for example if the sending of the signal S may be sent based on a configured grant. If the user equipment UE determines at step S22 that such transmission of the signal S may be predictable, then the user equipment UE may emit, at a step S42, a support signal S' to the base station BS. In particular, such support signal S' may include an indication regarding the transmission time $T_{snd}$ of the signal S and/or a request to receive an updated TAC signal beforehand. On the contrary, if, at step S22, the user equipment UE determines that such transmission of the signal S may not be predictable (for example, if there is no configured grant for sending the signal S), the user equipment UE further proceeds with step S30, which will be further detailed.

Yet, if at step S20, the final command time $C_N$ is after the validity time $T_{ths}$ (or equivalently, if the first time gap between the final command time $C_N$ and the current time T at which the step S20 is performed is below the preconfigured first gap threshold), the user equipment UE determines that the final TAC signal associated with the final command time $C_N$ (and thus the correction parameter related to timing advance command value contained in such TAC signal, or final closed loop correction) is still relevant at current time T. In particular, the user equipment UE may rely on the value of the timing advance command contained in such final TAC signal as a guideline to adjust the updated value to be used as timing advance TA with respect to the current timing advance value. To that end, at a step S21, the user equipment UE compares the final timing advance command value (that is, the correction parameter corresponding to the final closed loop correction) contained in such final TAC signal with a preconfigured correction threshold $N_{ths,CL}$ set by the user equipment UE, or predefined, or transmitted by the base station BS to the user equipment UE. Such preconfigured correction threshold $N_{ths,CL}$ may for example be set between 30 and 50 and may be expressed in steps, samples, or time units.

If, at step S21, the timing advance command value contained in such final TAC signal is determined to be below the preconfigured correction threshold $N_{ths,CL}$, the user equipment UE determines that the amount of closed loop correction to be applied to the current timing advance value is not significant : in other words, compared to the current value of timing advance lastly computed by the user equipment UE at a time before the current time T, the propagation delay to be compensated between the user equipment UE and the network reference point has not significantly changed. Thus, the user equipment UE determines, at a step S41 following step S21, that the updated value of timing advance TA may be determined as corresponding to the current value of timing advance TA. In a particular embodiment, at step S41, the user equipment UE may also update the timing error parameter by decreasing the timing error parameter value, since the user equipment UE determines that the updated timing advance value determined at step S41 is rather accurate considering the current time T. Yet, if, at step S21, the timing advance command value contained in the final TAC signal exceeds the preconfigured correction threshold $N_{ths,CL}$, the user equipment UE determines at step S21 that a significant timing advance correction is required for the current value of timing advance TA in anticipation of sending the signal S. In particular, if the final closed loop correction is considered significant in the final TAC signal, the user equipment UE determines that it requires updated information for determining the updated value to be used as timing advance TA. Such updated value may potentially be more significant than the timing advance command value contained in the final TAC signal since the timing advance command value has a limited size (and thus can only indicate a limited correction).

To that end, following step S21, the user equipment UE determines, at a step S30 following either step S21 or step S22, whether updated assistance information may be retrieved at an updated assistance time $A_{N+1}$ after the current time T and possibly, by according to a time-related parameter. In other words, the user equipment UE predicts when the upcoming transmission of updated open loop information from the network NW will occur and checks whether the corresponding updated assistance time $A_{N+1}$ is acceptable (or soon enough) for the user equipment UE regarding for example the time-related parameter. Such time-related parameter may for example correspond to a transmission deadline time $T_r$. The terms "acceptable" and "soon enough" may be understood here as before the transmission deadline $T_r$ for sending the signal S. Possibly, "acceptable" and "soon enough" may be understood here as before the postponed time of transmission $T_p$. The expressions "acceptable" and "soon enough" may also be understood as before the expiration of a given timer related to the time-related parameter. In particular, the user equipment UE may predict when such next transmission of updated open loop information from the network NW will occur based on a preconfigured periodicity of assistance information transmission, determined or estimated by the user equipment UE, notably by using previous assistance times $A_{N-1}$, $A_{N-2}$ etc. and/or the final assistance time $A_N$.

If, at step S30, the user equipment UE determines that such updated open loop information may be transmitted by the network NW soon enough, for example after the target time of transmission $T_t$ yet before the postponed time of transmission $T_p$, the user equipment UE decides, at step S43 (included in step S2 of figure 3) to select the transmission time $T_{snd}$ to be the postponed time of transmission $T_p$, so that the user equipment UE voluntarily waives the immediate upcoming time opportunity to send the signal S (that is, at the target time of transmission $T_t$) in order to wait to receive the updated open loop. In such case of step S43, the user equipment UE may not be required to send any support signal S' : the user equipment UE has determined that an updated open loop transmission will occur at an updated assistance time $A_{N+1}$ within a predictable time and the user equipment UE will determine the updated value to be used as timing advance TA based on such updated open loop transmission. However, if, at step S30, the user equipment UE predicts that no transmission of open loop information from the network NW will occur soon enough (e.g., the updated assistance time $A_{N+1}$ predicted by the user equipment UE is later than the transmission deadline time $T_r$ of the signal S), the user equipment UE decides, at a step S40 following step S30, to determine the updated value of timing advance TA without updated open loop and/or closed loop information. In particular, the user equipment UE may determine the updated value of timing advance TA as the current value of timing advance (and thus based on the final TAC signal). In a particular embodiment, the user equipment UE may also update, at step S40, the timing error parameter by increasing the timing error parameter value, since the user equipment UE determines that the updated timing advance value TA determined may be inaccurate, considering the significant correction implied in the last TAC signal. In such case, the user equipment UE may decide to select the transmission time $T_{snd}$ to be the target time of transmission $T_t$ since the user equipment UE determines that there is no interest in postponing the sending of the signal S (no updated information may be expected in the meanwhile). Yet, updating the timing error parameter enables the user equipment UE to evaluate the accuracy of the timing advance implementation of the user equipment UE, and in such case of step S40, to evaluate that the updated value of timing advance TA determined may be inaccurate, since it missed updated information.

Similarly, the user equipment UE may also, at step S30, determines or anticipates the updated measurement time $M_{N+1}$ associated with updated measurements to be obtained by the user equipment UE. The reasoning applied to the updated assistance time $A_{N+1}$ may also be applied to the updated measurement time $M_{N+1}$.

At step S20, the user equipment UE also compares the final command time $C_N$, at which the final TAC signal was received by the user equipment UE, with the final assistance time $A_N$ and/or with the final measurement time $M_N$, at respectively associated with the final assistance information and/or with the final measurements at the disposal of the user equipment UE. If, at step S20, the final command time $C_N$ is prior to any (or both) of the final assistance time $A_N$ and/or the final measurement time $M_N$, the user equipment UE proceeds to step S23. In particular, the user equipment UE proceeds to such step S23 independently from the obsolescence (or not) of the last TAC signal as aforementioned.

At step S23, the user equipment UE determines whether the final open loop information reflects a significant timing advance correction to the current value of timing advance. To that end, at step S23, the user equipment UE may compare the open loop correction provided by the final assistance information and/or the final measurements, such open loop correction being also referred to as the self-correction parameter. Such self-correction parameter is then compared at step S23 to a preconfigured self-correction threshold $N_{ths,OL}$. Such preconfigured self-correction threshold $N_{ths,OL}$ aims to quantify the significance of the open loop correction. In an embodiment, such preconfigured self-correction threshold $N_{ths,OL}$ may be equal to the preconfigured correction threshold $N_{ths,CL}$. The user equipment UE may determine that the final open loop information reflects a significant timing advance adjustment (that is, a significant open loop correction) of the current value of timing advance if the user equipment UE determines that the self-correction parameter obtained based on such final open loop information exceeds the preconfigured self-correction threshold $N_{ths,OL}$. In an embodiment, the final open loop information may be considered by the user equipment UE to reflect a significant timing advance adjustment if the final measurement performed by the user equipment UE at the final measurement time $M_N$ results in a drastic change of location (e.g., above one or several kilometers) of the user equipment UE, compared to a previous location measurement performed at a previous measurement time $M_{N-1}$ for example. In an embodiment, the final open loop information may be considered by the user equipment UE to reflect a significant timing advance adjustment if the final assistance information performed at the final assistance time $A_N$ results in a considerable movement of the satellite SAT according to satellite ephemerides with respect to a previous satellite position obtained at a previous assistance time $A_{N-1}$ for example.

If, at step S23, the user equipment UE determines that the final open loop information reflects a significant timing advance adjustment to be applied to the current value of timing advance, the user equipment UE determines that it requires updated information in order to accurately determine the updated value of timing advance TA to be used when sending the signal S, since such updated value TA may potentially be significantly different from the current value of timing advance. To that end, the user equipment UE may emit, at a step S44 following step S23, a support signal S' to the base station BS. In particular, such support signal S' may be a signal requesting updated assistance information and/or updated timing advance command. In a particular embodiment, the user equipment UE may emit such support signal S' using a support value used as timing advance corresponding to the current value of timing advance TA (thus, taking into account the last open loop information when sending the support signal S'). The user equipment UE thus potentially compensate, at least partially, the actual propagation delay at the current time T between the user equipment UE and the network reference point. In particular, such support signal S' may be emitted at the immediate next time opportunity to request assistance information as configured by the network NW. In the case the sending of the signal S is attached to a specific transmission deadline time $T_r$, the support signal S' may also comprise an indication requesting a potential reconfiguration of the assistance information transmission and/or an updated TAC signal so that the user equipment UE may be able to retrieve such updated assistance information and/or updated timing advance command before the transmission deadline time $T_r$. In an embodiment, the user equipment UE may also proceed to perform, at step S44, updated measurements at an updated measurement time $M_{N+1}$ providing its hardware capabilities and/or the preconfigured time opportunities to do so. The request may optionally also concern a configuration of a measurement gap (and thus an opportunity for measurement), in cases where measurements at the user equipment UE side can only be made during measurement gaps configured by the network. The reception (or non-reception) of the updated assistance information following such emission of the support signal S' at step S44 is not controlled by the user equipment UE. Thus, at step S44, the user equipment UE, providing latency requirements for sending the signal S, for example reflected by transmission deadline time $T_r$, may select the transmission time $T_{snd}$ to be the postponed time of transmission $T_p$, notably in order to wait for possible updated assistance information and/or updated TAC signal. The user equipment UE may then, depending on the latency requirements, wait until the expiration of a predefined timer after the sending of the support signal S' to send the signal S (even if no updated information is obtained). The user equipment UE may also, depending on the latency requirements, wait until the expiration of a predefined timer after the sending of the support signal S' to send another support signal S'. The user equipment UE may also selects the transmission time $T_{snd}$ of the signal S to be the target time of transmission $T_t$, notably if the support signal S' is emitted beforehand.

If, at step S23, the user equipment UE determines that the final open loop information does not reflect a significant timing advance adjustment compared to the current value of timing advance (e.g., if the user equipment UE determines that neither its location nor the position of the satellite SAT has changed, or significantly changed, with respect to previously obtained open loop information, for example at assistance and measurement times $A_{N-1}$ and $M_{N-1}$), the user equipment UE proceeds to determine, at a step S31 following step S23, whether such final open loop information is obsolete with respect to the current time T. To that end, at step S31, the user equipment UE may determine a second time gap between the current time T and the final assistance time $A_N$ and/or the final measurement time $M_N$. The user equipment UE may then compare such second time gap with a preconfigured second gap threshold. Equivalently, the user equipment UE may compare the final assistance time $A_N$ and/or the final measurement time $M_N$ with the validity time $T_{ths}$. In particular, if, at step S31, the user equipment UE determines that the final assistance time $A_N$ and/or the final measurement time $M_N$ is after the validity time $T_{ths}$ (or equivalently, if the second time gap between any of the last assistance time $A_N$ and/or the last measurement time $M_N$ and the current time T is below the preconfigured second gap threshold), the user equipment UE considers that the final open loop information is recent (that is, not obsolete) with respect to the current time T. In such case, the user equipment UE determines at a step S46 following step S31, that the final open loop information relevantly indicates that no significant timing advance correction has to be applied to the current value of timing advance for sending the signal S considering current time T. Thus, at step S46, the user equipment determines the updated value of timing advance TA without requiring updated information. In particular, at step S46, the user equipment UE may determine that the updated value of timing advance TA to be used for sending the signal S corresponds to the current value of timing advance TA. In a particular embodiment, the user equipment UE may also update, at step S46, the timing error parameter by decreasing the timing error parameter value, since the user equipment UE determines that the updated timing advance value TA should not significantly differ from the current value of timing advance. In such case, at step S46, the user equipment UE may select the transmission time $T_{snd}$ of the signal S to be the target time of transmission $T_t$ since the user equipment UE has no need to postpone the transmission of the signal S to wait for any updated information.

However, if, at step S31, the user equipment UE determines that the final assistance time $A_N$ and/or the final measurement time $M_N$ is prior to the validity time $T_{ths}$ (or equivalently, if the second time gap between any of the final assistance time $A_N$ and/or the final measurement time $M_N$ and the current time T exceeds the preconfigured second gap threshold), the user equipment UE considers that the final open loop information is obsolete. In an embodiment, the user equipment UE may also determine at step S31, a third time gap between the final assistance time $A_N$ and the final measurement time $M_N$. Such third time gap may then be compared to a preconfigured third gap threshold, so as to determine the consistency of the final open loop information. Thus, the final open loop information may be considered obsolete at step S31, either if the second time gap between any of the final assistance time $A_N$ and/or the final measurement time $M_N$ and the current time T exceeds the preconfigured second gap threshold, or if the third time gap exceeds the preconfigured third gap threshold. In the case of obsolete final open loop information, the user equipment UE determines at step S31 that it requires updated information as it considers that the final assistance information and/or the final measurements (and thus, that the indication of an unsignificant open loop correction as determined at step S23) is not reliable at the current time T. For example, between the final assistance time $A_N$ and/or the final measurement time $M_N$ and the current time T, the user equipment UE and/or the satellite SAT may have significantly moved. In such case, at step S45, the user equipment UE proceeds to emit, in a similar way to step S44, a support signal S' requesting for updated open loop information. In an embodiment, the user equipment UE may also proceed to perform, at step S45, updated measurements providing its hardware capabilities and/or the preconfigured time opportunities to do so. The user equipment UE may then decide on the transmission time $T_{snd}$ for sending the signal S depending notably on the potential latency requirements for sending the signal S, on the potential updated assistance time $A_{N+1}$ and/or updated measurement time $M_{N+1}$. In particular, the user equipment UE may, providing the latency requirements, select the transmission time $T_{snd}$ to be the postponed time of transmission $T_p$ so as to wait for potential updated information. The user equipment UE may also select the transmission time $T_{snd}$ to be the target time of transmission $T_t$, for example if the support signal S' is emitted before the target time of transmission $T_t$ and if updated information is received before the target time of transmission $T_t$. In such case, the signal S may be sent using an updated value of timing advance TA determined based on the updated information. The timing error parameter may then be updated by decreasing the timing error parameter value. Yet, the user equipment UE may also select the transmission time $T_{snd}$ to be the target time of transmission $T_t$ despite the absence of if updated information is received before the target time of transmission $T_t$, for example if the support signal S' is emitted before the target time of transmission $T_t$ and if the latency requirements does not enable the user equipment UE to waive its immediate upcoming time opportunity for sending the signal S. In such case, the signal S may be sent using an updated value of timing advance TA determined based on the final open loop and closed loop information. The timing error parameter may then be updated by increasing the timing error parameter value.

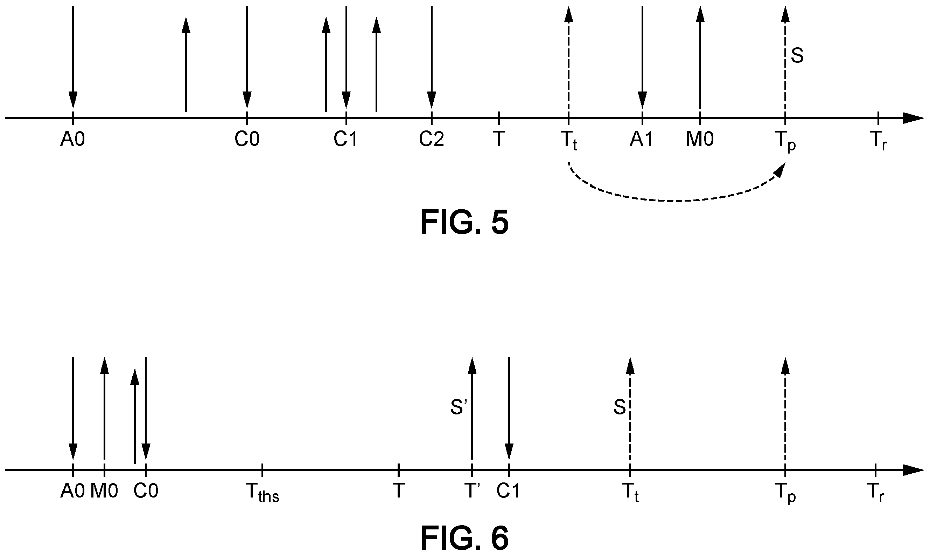

Figures 5, 6 and 7 further provide examples for sending a signal S to the base station BS using an updated value of timing advance TA according to different embodiments of the present disclosure. Figures 5, 6 and 7 represent timelines of signals sent and received by the user equipment UE as well as from measurements performed by the user equipment UE. Signals and information received by the user equipment UE from other entities such as the base station BS and more generally the network NW, are represented by downward arrows pointing towards the timeline. Signals and information sent by the user equipment UE as well as measurements performed by the user equipment UE are represented by upward arrows pointing out of the timeline. Some represented transmission, reception and measurement steps are associated with respective times. On each of figures 5, 6 and 7, time T represents a current time T at which the proposed method is considered.

Referring to figures 5, 6 and 7, the user equipment UE intends, at current time T, to transmit a signal S to the base station BS. As aforementioned, such signal S may be a data, SR, and/or BSR signal for example. Configured time opportunities $T_t$, $T_p$ are proposed for sending such signal S. Two time opportunities $T_t$, $T_p$ are represented on figures 5, 6 and 7 but in other possible embodiments, more or less time opportunities may exist for transmitting the signal to the base station BS. Time opportunities for transmitting the signal S to the base station BS comprise at least a target time of transmission $T_t$ and a postponed time of transmission $T_p$ later than the target time of transmission $T_t$.

Referring to figure 5, at the stage of the current time T:

- the user equipment UE has received final assistance information from the network NW associated with a last (or final) assistance time $A_0$,

- the user equipment UE has also received, after emitting three uplink signals to the base station BS, as represented by three upward arrows, three timing advance command (or TAC) signals from the base station BS at respective command times $C_0$, $C_1$ and $C_2$. In particular, such command times $C_0$, $C_1$ and $C_2$ are computed on the base station BS side and do not directly depend on the time of transmission of the emitted uplink signals. Such TAC signals are received by the user equipment UE as long as the user equipment UE transmits uplink signals to the base station BS. The most up-to-date closed loop information is thus associated with the final command time $C_2$.

In other words, at the current time T, the user equipment UE has received more recent (and thus up-to-date) timing advance adjustment from closed loop information with respect to timing advance adjustment from open loop information.

In the context of the present disclosure, at the current time T, the user equipment UE may then select a time window among the configured time opportunities $T_t$, $T_p$ to send the signal S to the base station BS. In particular, such selection of the transmission time $T_{snd}$ may include, in the embodiment of figure 5, determining an updated assistance time $A_1$ when updated assistance information may be retrieved by the user equipment UE. Such updated assistance time $A_1$ may notably be predicted by the user equipment UE based on the last assistance time $A_0$ and a configured periodicity of assistance information transmission. Such configured periodicity of assistance information transmission may be determined and/or computed by the user equipment UE based on data related to the last assistance time $A_0$. Such data related to the last assistance time $A_0$ may comprise several assistance times prior to the last assistance time $A_0$ (not represented on figure 5). In the situation illustrated on figure 5, the user equipment UE predicts that the updated assistance time $A_1$ will occur after the target time of transmission $T_t$ and before the postponed time of transmission $T_p$. The user equipment UE may also determine that the user equipment UE will be able to perform measurements at a measurement time $M_0$ prior to the postponed time of transmission $T_p$. Such measurement time $M_0$ being notably predicted or anticipated by the user equipment UE based on its hardware capabilities (e.g., the user equipment UE has the capability to perform measurements whenever such measurements are required) and/or time opportunities provided by the network NW (e.g., a measurement opportunity is provided to the user equipment UE at measurement time $M_0$).

In such situation, the user equipment UE will select, at the current time T, the transmission time $T_{snd}$ as the postponed time of transmission $T_p$. In other words, despite being provided an upcoming time opportunity to send the signal S (that is, the target time of transmission $T_t$), the user equipment UE will intentionally decide to postpone such sending to a later time opportunity (that is, the target time of transmission $T_p$), so as to obtain more updated assistance information with respect to the last assistance information received at the last assistance time $A_0$.

Based on such updated assistance information associated with the updated assistance time $A_1$ and on updated measurements performed at updated measurement time $M_0$, the user equipment UE is able to update a value to be used as a timing advance TA in the cell when sending the signal S at the postponed time $T_p$, based on such updated open loop information.

In a particular embodiment, the TAC signals received at respective command times $C_0$, $C_1$ and $C_2$ may all indicate big corrections for the updated value to be used as timing advance TA in the cell with respect to the last value used by the user equipment UE as a timing advance in the cell. Such big corrections may for example indicate a timing advance value switch comprised between 50 and 63 in each TAC signal. In such case, the user equipment UE may also select the transmission time $T_{snd}$ to be the postponed time of transmission $T_p$ based on a requirement to perform a considerable timing advance correction, such considerable timing advance correction being quantifiable via open loop adjustment.

In a particular embodiment, the transmission time $T_{snd}$ is selected to be the postponed time of transmission $T_p$, providing that potential latency requirements and/or timing constraints to be respected by the user equipment UE when sending the signal S are met by sending the signal S at such postponed time of transmission $T_p$. For example, referring to figure 5, timing constraints may request the user equipment UE to send the signal S before the potential transmission deadline $T_r$.

Referring to figure 6, prior to current time T:

- the user equipment UE has received last assistance information from the network NW at a last assistance time $A_0$,

- the user equipment UE has performed last measurements at a last measurement time $M_0$,

- the user equipment UE has also received, after emitting an uplink signal to the base station BS, as represented by the upward arrow, a last timing advance command (or TAC) signal from the base station BS at a last command time $C_0$.

In particular, such last assistance time $A_0$, last measurement time $M_0$ and last command time $C_0$ are considered obsolete at the current time T, as they precede the validity time $T_{ths}$, for example preset by or sent to the user equipment UE. In other words, at the current time T, the user equipment UE determines that final information from both the open loop and closed loop sources enabling to update the value to be used as timing advance for sending the signal S is obsolete. Equivalently, the time gap between the final command time $C_0$ may be compared with a preconfigured first gap threshold and each of the final assistance time $A_0$ and the final measurement time M with the current time T may be compared with a preconfigured second gap threshold. For the sake of simplicity, such gap thresholds are considered to be equal and corresponding to the time difference between the current time T and the validity time $T_{ths}$. In an embodiment, the time gap (also referred to as the third time gap) between the final assistance time $A_0$ and the final measurement time $M_0$ may also be compared with a preconfigured third gap threshold.

The user equipment UE may select a time window among the configured time opportunities $T_t$, $T_p$ to send the signal S to the base station BS. However, in the context of figure 6, the user equipment UE determines that it requires updated information for determining an accurate updated value to be used as a timing advance in the cell when sending the signal S, since the last assistance information, measurements and TAC are considered obsolete. In an embodiment, the user equipment UE may determine that updated information is required because the third time gap between the final assistance time $A_0$ and the final measurement time $M_0$ may exceed the preconfigured third gap threshold.

Thus, the user equipment UE may determine, at the current time T, whether it may emit an uplink transmission to the base station BS at a time opportunity T' prior to any configured time opportunities $T_t$, $T_p$ to send the signal S to the base station BS. Such an uplink transmission may be predictable for the user equipment UE in case of periodic reports performed by the user equipment UE for example.

In such context of figure 6 (and providing that the user equipment UE has a time opportunity T' to do so), the user equipment UE may decide to emit a supplementary signal S' to the base station BS, such supplementary signal S' being distinct from the signal S, as represented on figure 6 at time T'.

After emitting such supplementary signal S', the user equipment UE may potentially receive an updated TAC signal at an updated command time $C_1$.

Based on such updated TAC signal, the user equipment UE updates the value to be used as timing advance in the cell as aforementioned and sends the signal S at the transmission time $T_{snd}$ selected to be either the target time of transmission $T_t$ or the postponed time of transmission $T_p$, depending on the updated command time $C_1$.

In a particular embodiment, the transmission time $T_{snd}$ is selected to be the postponed time of transmission $T_p$, providing that potential latency requirements and/or timing constraints to be respected by the user equipment UE when sending the signal S are met by sending the signal S at such postponed time of transmission $T_p$. For example, referring to figure 6, timing constraints may request the user equipment UE to send the signal S before the potential transmission deadline $T_r$ (that may further take into account some internal processing time).

Referring to figure 7, prior to current time T:

- the user equipment UE has received last assistance information from the network NW at last assistance times $A_0$ and $A_1$,

- the user equipment UE has performed last measurements at last measurement times $M_0$ and $M_1$,

- the user equipment UE has also received, after emitting an uplink signal to the base station BS, as represented by the upward arrow, a last timing advance command (or TAC) signal from the base station BS at a last command time $C_0$. In particular, as represented on figure 7, last command time $C_0$ is prior to last assistance time $A_1$.

In particular, in the context of figure 7, it is considered that the last assistance information received at last assistance time $A_1$ indicates significant timing advance adjustments with respect to the last timing advance value used by the user equipment UE in the cell (for example for performing the last uplink signal). In other words, the self-correction parameter provided by the last assistance information exceeds the preconfigured self-correction threshold $N_{ths,OL}$. Moreover, such last assistance information is considered obsolete as the last assistance time $A_1$ is prior to the validity time $T_{ths}$.

At the current time T, the user equipment UE thus determines, based on such last assistance information received, that potential substantial timing corrections are to be performed to update the value to be used as timing advance TA in the cell when sending the signal S. Yet, since such last assistance information is considered obsolete by the user equipment UE at the current time T, such last assistance information may not be relevant for determining the updated value to be used as timing advance TA for sending the signal S.

Thus, in such situation represented on figure 7, the user equipment UE may determine a support timing advance value based on the last assistance information received at last assistance time $A_1$. The user equipment UE may then send a support signal S' to the base station BS (providing that the user equipment UE has the time opportunity to do so) using the support timing advance value. Such support timing advance value may notably correspond to the current value of timing advance determined by the user equipment at a time prior to the current time T based on the final information. In particular, such support signal S' may request the transmission of updated assistance information and/or updated timing advance command, and/or the configuration of a measurement gap (or time) for measures, providing that such a measurement gap is under the network NW's control.

Upon receiving updated assistance information at an updated assistance time $A_2$, the user equipment UE may then determine the updated value of timing advance TA to be used for sending signal S. The user equipment UE then sends the signal S at the transmission time $T_{snd}$ selected to be either the target time of transmission $T_t$ or the postponed time of transmission $T_p$, depending on the updated assistance time $A_2$, the support time when the support signal S' is sent, and/or on the latency requirements for sending the signal S.

In a particular embodiment, the transmission time $T_{snd}$ is selected to be the postponed time of transmission

$T_p$, providing that potential latency requirements and/or timing constraints to be respected by the user equipment UE when sending the signal S are met by sending the signal S at such postponed time of transmission $T_p$. For example, referring to figure 7, timing constraints may request the user equipment UE to send the signal S before the potential transmission deadline $T_r$.

**Claims**

1. A method performed by a user equipment (UE) for sending a signal (S) to a base station (BS) using an updated value of timing advance (TA), the user equipment (UE) being connected to the base station (BS), the base station (BS) corresponding to a cell supported by a non-geostationary orbit satellite (SAT) of a satellite communication network (NW),

   the user equipment (UE) determining values of timing advance based on at least:

   - data related to assistance information received by the user equipment associated with assistance times ($A_i$),
   - data related to measurements obtained by the user equipment (UE) associated with measurement times ($M_i$),
   - data related to timing advance commands received from the network (UE) associated with command times ($C_i$),

   the method comprising :
   selecting a transmission time ($T_{snd}$) of the signal (S) between at least:

   - - a target time of transmission ($T_t$) of the signal (S), and
   - - a postponed time of transmission ($T_p$) of the signal (S), said postponed time of transmission ($T_p$) being later than the target time of transmission ($T_t$),

   transmitting the signal (S) to the base station (BS) at the transmission time ($T_{snd}$) using the updated value of timing advance (TA),
   wherein the selected transmission time ($T_{snd}$) is chosen on the basis of a combination of at least two elements among at least:

   - a time-related parameter,
   - data related to a final timing advance command associated with a final command time ($C_N$),
   - data related to final measurements associated with a final measurement time ($M_N$),
   - data related to final assistance information associated with a final assistance time ($A_N$),
   - data related to the final measurement time ($M_N$),
   - data related to the final command time ($C_N$), and
   - data related to the final assistance time ($A_N$).

2. The method according to claim 1 further comprises :
   emitting a support signal (S') to the base station (BS), distinct from the signal (S), said support signal (S') being transmitted at a support time depending on the target time of transmission ($T_t$) of the signal (S).

3. The method according to claim 2, data related to the assistance information and data related to the measurements providing values of a self-correction parameter being used by the user equipment (UE) to determine the values of timing advance,
   and wherein the emission of the support signal (S') is furthermore based on at least one of following criteria :

   - a first time gap between the final command time ($C_N$) and a current time (T) exceeding a preconfigured first gap threshold, or
   - the final command time ($C_N$) preceding the final assistance time ($A_N$) and :

   - - a second time gap between the final assistance time ($A_N$) and/or the final measurement time ($M_N$), and the current time (T) exceeding a preconfigured second gap threshold, or
   - - the value of the self-correction parameter determined based on the data related to the final assistance information and/or the final measurements exceeding a preconfigured self-correction threshold ($N_{ths,OL}$).

4. The method according to any one of claims 2 and 3, the time-related parameter being related to a validity time ($T_{ths}$) of the data used to determine the values of timing advance, and wherein the emission of the support signal (S') is furthermore based on the following criterium :
   - any one of the final command time ($C_N$), the final measurement time ($M_N$) and the final assistance time ($A_N$) is prior to the validity time ($T_{ths}$).

5. The method according to any one of claims 2 to 4, wherein the support signal (S') is emitted using a support value of timing advance, said support value of timing advance being determined based on a combination of at least two elements among at least:

   - the time-related parameter,
   - the data related to the final timing advance command,
   - the data related to the final measurements,
   - the data related to final assistance information,
   - the data related to the final measurement time ($M_N$),
   - the data related to the final command time ($C_N$), and
   - the data related to the final assistance time ($A_N$).

6. The method according to any one of claims 2 to 5, wherein the support signal (S') is one element among at least:

   - an uplink reference signal such as a Sounding Reference Signal,
   - a control signal,
   - a Buffer Status Report, and
   - a Scheduling Request.

7. The method according to any one of the precedent claims, wherein the transmission time ($T_{snd}$) is selected to be the postponed time of transmission ($T_p$) if :

   - data related to updated assistance information is predicted to be associated with an updated assistance time ($A_{N+1}$) comprised between the target time of transmission ($T_t$) and the postponed time of transmission ($T_p$), and/or
   - data related to updated measurements is determined to be associated with an updated measurement time ($M_{N+1}$) comprised between the target time of transmission ($T_t$) and the postponed time of transmission ($T_p$).

8. The method according to any one of the precedent claims, data related to timing advance commands providing values of a correction parameter being used by the user equipment (UE) to determine the values of timing advance,

   and wherein the transmission time ($T_{snd}$) is selected to be the postponed time of transmission ($T_p$) if:

   - a gap between the final command time ($C_N$) and a current time (T) is below a preconfigured first gap threshold, and
   - the value of the correction parameter determined based on the data related to the final timing advance command exceeds a preconfigured correction threshold ($N_{ths,CL}$), and
   - data related to updated assistance information is predicted to be associated with an updated assistance time ($A_{N+1}$) later than the final assistance time ($A_N$) and later than the current time (T), said updated assistance time ($A_{N+1}$) being comprised between the target time of transmission ($T_t$) and the postponed time of transmission ($T_p$), and/or

   data related to updated measurements is determined to be associated with an updated measurement time ($M_{N+1}$) later than the final measurement time ($M_N$) and later than the current time (T), said updated measurement time ($M_{N+1}$) being comprised between the target time of transmission ($T_t$) and the postponed time of transmission ($T_p$).

9. The method according to claim 7 or 8, wherein the determination of the updated value of timing advance (TA) used to send the signal (S) is performed based on at least said updated assistance information associated with said updated assistance time ($A_{N+1}$) and/or said updated measurements associated with said updated measurement time ($M_{N+1}$).

10. The method according to any one of the precedent claims, the user equipment updating values of a timing error parameter relating to an estimation of an error when determining the values of timing advance, and wherein the method further comprises :
updating the timing error parameter if the transmission time ($T_{snd}$) is selected to be the target time of transmission ($T_t$).

11. The method according to claim 10, data related to timing advance commands providing values of a correction parameter being used by the user equipment (UE) to determine the values of timing advance, data related to the assistance information and data related to measurements providing values of a self-correction parameter being used by the user equipment (UE) to determine the values of timing advance,

and wherein the update of the timing error parameter consists in
increasing the value of the timing error parameter if :
- a gap between the final command time ($C_N$) and a current time (T) is below a preconfigured first gap threshold, and
the value of the correction parameter determined based on the data related to the final timing advance command ($C_N$) exceeds a preconfigured correction threshold, and data related to updated assistance information is predicted to be associated with an updated assistance time ($A_{N+1}$) later than the final assistance time ($A_N$), said updated assistance time ($A_{N+1}$) being later than the postponed time ($T_p$) and/or data related to updated measurements is determined to be associated with an updated measurement time ($M_{N+1}$) later than the final measurement time ($M_N$), said updated measurement time ($M_{N+1}$) being later than the postponed time of transmission ($T_p$),
and/or in decreasing the value of the timing error parameter:
- if the gap between the final command time ($C_N$) and the current time (T) is below a preconfigured alternate first gap threshold,
and the value of the correction parameter determined based on the data related to the final timing advance command ($C_N$) is below a preconfigured alternate correction threshold,
- or if the final command time ($C_N$) precedes one of the final assistance time ($A_N$) and the final measurement time ($M_N$),
and the value of the self-correction parameter determined based on the data related to the final assistance information and/or on the data related to the final measurements is below a preconfigured alternate self-correction threshold,
and a gap between the final assistance time ($A_N$) and/or the final measurement time ($M_N$) and the current time (T) is below a preconfigured alternate second gap threshold.

12. The method according to any one of the precedent claims, the time-related parameter being associated to a transmission deadline time ($T_r$), and wherein the transmission time ($T_{snd}$) of the signal is selected to precede the transmission deadline time ($T_r$).

13. The method according to any one of the precedent claims further comprises performing updated measurements at an updated measurement time ($M_{N+1}$) if a third time gap between the final measurement time ($M_N$) and the final assistance time ($A_N$) exceeds a preconfigured third gap threshold.

14. A user equipment (UE) configured to send a signal (S) to a base station (BS) using an updated value of timing advance (TA), the user equipment (UE) being connected to the base station (BS), the base station (BS) corresponding to a cell supported by a non-geostationary orbit satellite (SAT) of a satellite communication network (NW),

the user equipment (UE) being able to determine values of timing advance based on at least:

- data related to assistance information received by the user equipment (UE) associated with assistance times ($A_i$),
- data related to measurements obtained by the user equipment (UE) associated with measurement times ($M_i$),
- data related to timing advance commands received from the network (NW) associated with command times ($C_i$),

the user equipment (UE) comprising a processor (PROC-UE) and a non-transitory computer readable medium comprising instructions stored thereon, which, when executed by the processor (PROC-UE), configure the user equipment (UE) to

select a transmission time ($T_{snd}$) of the signal (S) between :

-- a target time of transmission ($T_t$) of the signal (S), and
-- a postponed time of transmission ($T_p$) later than the target time of transmission ($T_t$),

transmit the signal (S) to the base station (BS) at the transmission time ($T_{snd}$) using the updated value of timing advance (TA),

wherein the selected transmission time ($T_{snd}$) is chosen on the basis of a combination of at least two elements among at least:

- a time-related parameter,
- data related to a final timing advance command associated with a final command time ($C_N$),
- data related to final measurements associated with a final measurement time ($M_N$),
- data related to final assistance information associated with a final assistance time ($A_N$),
- data related to the final measurement time ($M_N$),
- data related to the final command time ($C_N$), and
- data related to the final assistance time ($A_N$).

**15.** A computer program product comprising program instruction code stored on a computer-readable medium for the execution of the method according to any one of claims 1 to 13.

FIG. 1

FIG. 2

**FIG. 3**

EP 4 311 125 A1

**FIG. 4**

FIG. 5

FIG. 6

EP 4 311 125 A1

EP 4 311 125 A1

A0 M0  C0    A1 M1 $T_{ths}$       T       A2          $T_t$          $T_p$      $T_r$

S'

S

## FIG. 7

PROC-UE

UE

## FIG. 8

INP

| PU1 | PU2 | PU3 | PU4 |

OUT

| MEM1 | MEM2 | BUF |

MEM-UE

Europäisches
Patentamt

European
Patent Office

Office européen
des brevets

## EUROPEAN SEARCH REPORT

Application Number

EP 22 30 6082

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SONY: "Enhancement for UL time synchronization", 3GPP DRAFT; R1-2103305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210412 - 20210420 7 April 2021 (2021-04-07), XP052178072, Retrieved from the Internet: URL:https://ftp.3gpp.org/tsg_ran/WG1_RL1/T SGR1_104b-e/Docs/R1-2103305.zip [retrieved on 2021-04-07] * the whole document * ----- | 1-15 | INV. H04B7/185 H04W56/00 |
| A | WO 2022/082662 A1 (APPLE INC [US]; YAO CHUNHAI [CN]) 28 April 2022 (2022-04-28) * figures 1, 3 * * paragraph [0018] - paragraph [0019] * * paragraph [0042] - paragraph [0043] * * paragraph [0045] * * paragraph [0047] - paragraph [0050] * ----- | 1-15 | |

**TECHNICAL FIELDS SEARCHED (IPC)**

H04B
H04W

The present search report has been drawn up for all claims

| Place of search | Date of completion of the search | Examiner |
|---|---|---|
| The Hague | 14 December 2022 | Akhertouz Moreno, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ..................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 30 6082

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2022

| Patent document cited in search report | Publication date | Patent family member(s) | Publication date |
|---|---|---|---|
| WO 2022082662 A1 | 28-04-2022 | NONE | |

EPO FORM P0459